# EUROPEAN PATENT APPLICATION

(11) **EP 4 845 174 A2**
(43) Date of publication of application: **25.11.2026**
(21) Application number: 26207845.4
(22) Date of filing: 09.06.2023
(51) Int. Cl.: H04N 23/81

(54) **INFORMATION PROCESSING DEVICE, INFORMATION PROCESSING METHOD, PROGRAM**

(30) Priority: 01.07.2022 JP 2022107173
(62) Document number(s) of the earlier application(s) in accordance with Art. 76 EPC: 23831034.6 / 4 550 812
(71) Applicant: Sony Group Corporation, Tokyo 108-0075 (JP)
(72) Inventor: SUDO, Fumihiko, Tokyo, 108-0075 (JP)
(74) Representative: D Young & Co LLP

(57) **Abstract**

An information processing device includes a determination unit that performs determination processing of determining whether or not an artifact occurs in a captured video of a camera by using an interval between light emitting elements of a display, a pixel interval between image sensors of the camera, characteristics of an optical low-pass filter of the camera, a focal distance, an F value, and a focusing distance of a lens of the camera, and a distance between the display and the camera in an imaging system that captures a video of the display with the camera.

## Description

### TECHNICAL FIELD

The present technology relates to an information processing device, an information processing method, and a program, and relates to a technology that can be used, for example, in video production using a virtual video.

### BACKGROUND ART

As an imaging method for producing video content such as a movie, a technology is known in which a performer performs acting with a so-called green screen and then a background video is synthesized.

Furthermore, in recent years, instead of green screen imaging, an imaging system has been developed in which a background video is displayed on a display device and a performer performs acting in front of the background video in a studio provided with a large display device to thereby enable imaging of the performer and the background, and this imaging system is known as a so-called virtual production, in-camera VFX, or LED wall virtual production.

Patent Document 1 below discloses a technology of a system that images a performer acting in front of a background video.

In addition, Patent Document 2 below discloses a technology of disposing an optical member having a film form or the like in order to prevent moire in a case where a large display device is imaged.

### CITATION LIST

### PATENT DOCUMENT

Patent Document 1: US Patent Application Publication No. 2020/0145644 A
Patent Document 2: JP 2014-202816 A

### SUMMARY OF THE INVENTION

### PROBLEMS TO BE SOLVED BY THE INVENTION

When a background video is displayed on a large display, and then a performer and a background video are captured with a camera, there is no need to separately synthesize the background video after the capturing, and the performer and staff member can visually understand the scene and perform acting or determine whether the acting is good or bad, or the like, which are more advantageous than green screen imaging.

However, in order to capture the video of the display, artifacts such as moire occur due to interference between pixels of the image sensor of the camera and pixels of the display panel. To avoid this, the camera needs to blur the display without focusing it.

However, since the occurrence condition of the moire and the like is unknown, it is necessary to actually change the positions of the camera and the performer at the imaging site or adjust the lens for trial and error. This deteriorates the efficiency of video production.

Therefore, the present disclosure proposes a technique capable of more accurately determining the occurrence of artifacts such as moire.

### SOLUTIONS TO PROBLEMS

An information processing device according to the present technology includes a determination unit that performs determination processing of determining whether or not an artifact occurs in a captured video of a camera by using an interval between light emitting elements of a display, a pixel interval between image sensors of the camera, characteristics of an optical low-pass filter of the camera, a focal distance, an F value, and a focusing distance of a lens of the camera, and a distance between the display and the camera in an imaging system that captures a video of the display with the camera.

That is, the information processing device determines whether or not an artifact such as moire occurs in a captured video in a case where the video of the display is captured by the camera before or during capturing by using the value of the interval between the light emitting elements described above.

### BRIEF DESCRIPTION OF DRAWINGS

Fig. 1 is an explanatory diagram of an imaging system of an embodiment of the present technology.
Fig. 2 is an explanatory diagram of a background video according to a camera position of the imaging system of the embodiment.
Fig. 3 is an explanatory diagram of a background video according to a camera position of the imaging system of the embodiment.
Fig. 4 is an explanatory diagram of a video content producing step of the embodiment.
Fig. 5 is a block diagram of the imaging system of the embodiment.
Fig. 6 is a flowchart of background video generation of the imaging system of the embodiment.
Fig. 7 is a block diagram of the imaging system using a plurality of cameras of the embodiment.
Fig. 8 is a block diagram of an information processing device of the embodiment.
Fig. 9 is an explanatory diagram of pre-visualization of the embodiment.
Fig. 10 is a block diagram of a configuration example including a determination unit according to the embodiment.
Fig. 11 is an explanatory diagram of a camera position operation video according to the embodiment.
Fig. 12 is an explanatory diagram of a moire alert according to the embodiment.
Fig. 13 is an explanatory diagram of an operation in the camera position operation video according to the embodiment.
Fig. 14 is a flowchart of moire alert processing of the embodiment.
Fig. 15 is a flowchart of moire alert processing at the time of imaging according to the embodiment.
Fig. 16 is an explanatory diagram of an image on an image sensor.
Fig. 17 is an explanatory diagram of an optical low pass filter (LPF).
Fig. 18 is an explanatory diagram of characteristics of an optical LPF.
Fig. 19 is an explanatory diagram of a width of a pixel.
Fig. 20 is an explanatory diagram of blur of an image on an image sensor.
Fig. 21 is an explanatory diagram of approximation of a regular dodecagonal shape.
Fig. 22 is an explanatory diagram of an image of a light emitting diode (LED).
Fig. 23 is an explanatory diagram of a state in which an image of an LED is divided into four by an optical LPF.
Fig. 24 is an explanatory diagram of a state in which the image of the LED is further blurred by a diameter δ.
Fig. 25 is an explanatory diagram of a pixel of an image sensor.
Fig. 26 is an explanatory diagram of brightness felt by each pixel of the image sensor.
Fig. 27 is an explanatory diagram of amplitude characteristics.
Fig. 28 is an explanatory diagram of amplitude characteristics approximated by an envelope.
Fig. 29 is an explanatory diagram of a state in which a camera is imaging a panel surface from an oblique direction.
Fig. 30 is an explanatory diagram of a range appearing in a camera.
Fig. 31 is an explanatory diagram of a shortest distance and a longest distance in a range appearing in a camera.
Fig. 32 is an explanatory diagram of a distance on an image sensor.
Fig. 33 is an explanatory diagram of distance calculation using a sub camera.
Fig. 34 is an explanatory diagram of distance calculation using a sub camera.
Fig. 35 is a flowchart of moire determination processing of the embodiment.
Fig. 36 is an explanatory diagram of an LED wall 505.
Fig. 37 is an explanatory diagram of an arrangement for making moire stand out.
Fig. 38 is a flowchart of another example of the moire determination processing according to the embodiment.

### MODE FOR CARRYING OUT THE INVENTION

Hereinafter, embodiments will be described in the following order.

### <1. Imaging System and Content Production>

### <2. Configuration of Information Processing Device>

### <3. Configuration including Artifact Determination Unit>

### <4. Determination Processing>

### <5. Summary and Modification Examples>

Note that, in the present disclosure, "video" or "image" includes both a still image and a moving image. In addition, "video" refers not only to a state in which video data is displayed on the display, but also video data in a state in which video data is not displayed on the display may be comprehensively referred to as "video".

For example, in the embodiments, a background video before being displayed on a display, a video captured by a camera, and the like are not a video actually being displayed but video data. Such video data is referred to as "background video", "captured video", or the like for convenience.

### <1. Imaging system and video content production>

An imaging system to which the technology of the present disclosure can be applied and production of a video content will be described.

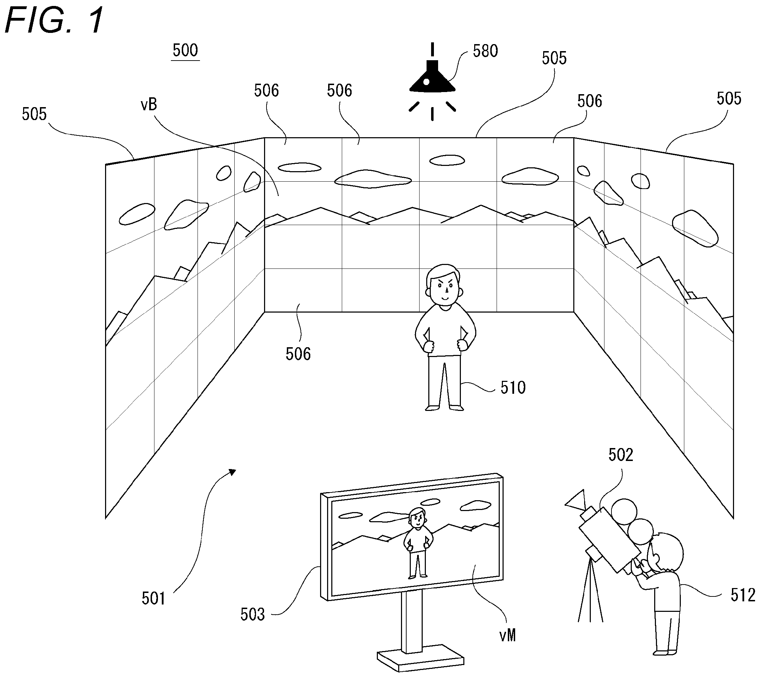

Fig. 1 schematically illustrates an imaging system 500. The imaging system 500 is a system that performs imaging for virtual production, and a part of equipment disposed in an imaging studio is illustrated in the drawing.

In the imaging studio, a performance area 501 in which a performer 510 performs performance such as acting is provided. A large display device is disposed on at least a back surface, left and right side surfaces, and an upper surface of the performance area 501. Although the device type of the display device is not limited, the drawing illustrates an example in which an LED wall 505 is used as an example of the large display device.

One LED wall 505 forms a large panel by vertically and horizontally connecting and disposing a plurality of LED panels 506. The size of the LED wall 505 is not particularly limited, but is only necessary to be a size that is necessary or sufficient as a size for displaying the background when the performer 510 is imaged.

A necessary number of lights 580 are disposed at a necessary position such as above or on the side of the performance area 501 to light the performance area 501.

In the vicinity of the performance area 501, for example, a camera 502 for capturing video content such as a movie is disposed. A camera operator 512 can move the position of the camera 502, and can perform an operation of an imaging direction, an angle of view, or the like. Of course, it is also conceivable that movement, angle of view operation, or the like of the camera 502 is performed by remote control. Furthermore, the camera 502 may automatically or autonomously move or change the angle of view. For this reason, the camera 502 may be mounted on a camera platform or a mobile body.

The camera 502 collectively images the performer 510 in the performance area 501 and a video displayed on the LED wall 505. For example, by displaying a scene as a background video vB on the LED wall 505, it is possible to capture a video similar to that in a case where the performer 510 actually exists and performs acting at the place of the scene.

An output monitor 503 is disposed near the performance area 501. The video captured by the camera 502 is displayed on the output monitor 503 in real time as a monitor video vM. Thus, a director and a staff member who produce video content can confirm the captured video.

As described above, the imaging system 500 that images the performance of the performer 510 in the background of the LED wall 505 in the imaging studio has various advantages as compared with the green screen imaging.

For example, in a case of the green screen imaging, it is difficult for the performer to imagine the background and the situation of the scene, which may affect the acting. Whereas, by displaying the background video vB, the performer 510 can easily perform acting, and the quality of acting is improved. Furthermore, it is easy for the director and other staff members to determine whether or not the acting of the performer 510 matches the background or the situation of the scene.

Furthermore, post-production after imaging is more efficient than that in the case of the green screen imaging. This is because what is called a chroma key composition may be unnecessary or color correction or reflection composition may be unnecessary. Furthermore, even in a case where chroma key composition is required at the time of imaging, it is only necessary to display green or blue video, and thus, it is also helpful to improve the efficiency that it is not necessary to add a physical background screen.

In the case of the green screen imaging, the color tone of green increases on the performer's body, dress, and objects, and thus correction thereof is necessary. Furthermore, in the case of the green screen imaging, in a case where there is an object in which a surrounding scene is reflected, such as glass, a mirror, or a snowdome, it is necessary to generate and synthesize an image of the reflection, but this is troublesome work.

On the other hand, in a case of imaging by the imaging system 500 in Fig. 1, the color tone of green does not increase, and thus the correction is unnecessary. Furthermore, by displaying the background video vB, the reflection on the actual article such as glass is naturally obtained and captured, and thus, it is also unnecessary to synthesize the reflection video.

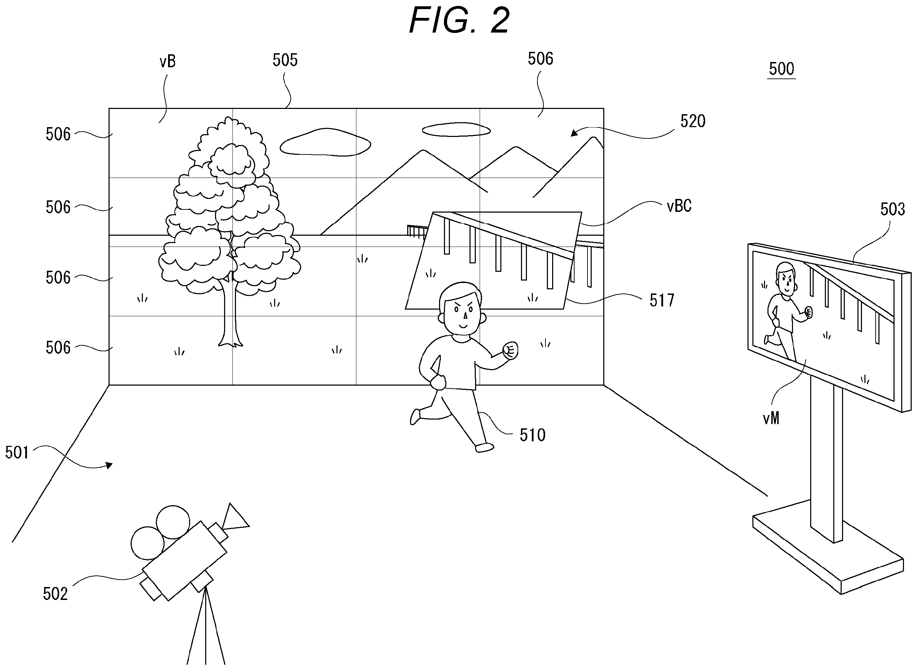

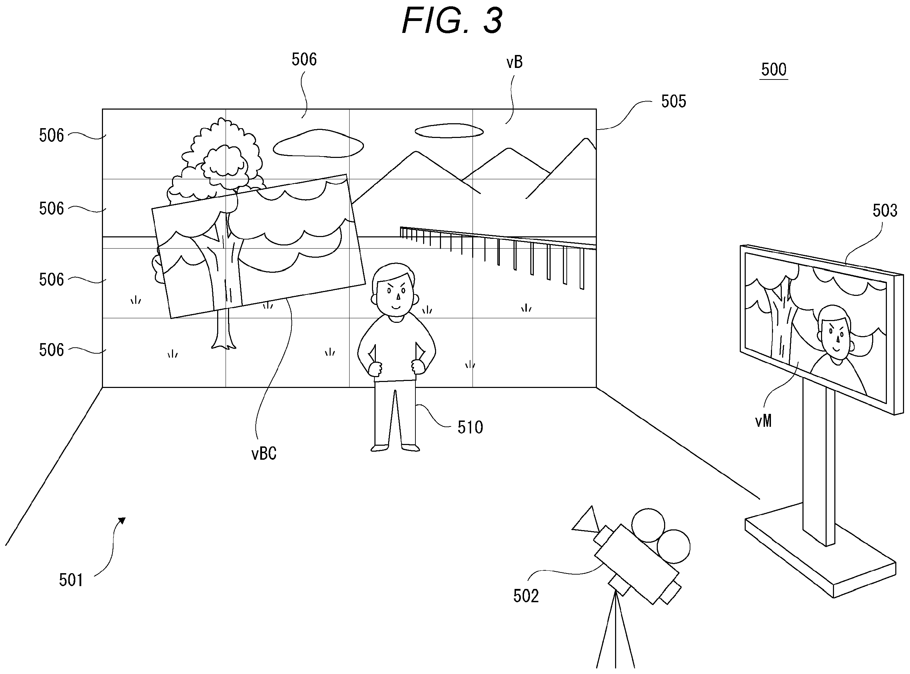

Here, the background video vB will be described with reference to Figs. 2 and 3. Even if the background video vB is displayed on the LED wall 505 and captured together with the performer 510, the background of the captured video becomes unnatural only by simply displaying the background video vB. This is because a background that is three-dimensional and has depth is actually used as the background video vB in a planar manner.

For example, the camera 502 can capture the performer 510 in the performance area 501 from various directions, and can also perform a zoom operation. The performer 510 also does not stop at one place. Then, the actual appearance of the background of the performer 510 should change according to the position, the imaging direction, the angle of view, and the like of the camera 502, but such a change cannot be obtained in the background video vB as the planar video. Accordingly, the background video vB is changed so that the background is similar to the actual appearance including a parallax.

Fig. 2 illustrates a state in which the camera 502 is imaging the performer 510 from a position on the left side of the drawing, and Fig. 3 illustrates a state in which the camera 502 is imaging the performer 510 from a position on the right side of the drawing. In each drawing, an imaging region video vBC is illustrated in the background video vB.

Note that a portion of the background video vB excluding the imaging region video vBC is referred to as an "outer frustum", and the imaging region video vBC is referred to as an "inner frustum".

The background video vB described here indicates the entire video displayed as the background including the imaging region video vBC (inner frustum).

A range of the imaging region video vBC (inner frustum) corresponds to a range actually imaged by the camera 502 in the display surface of the LED wall 505. Then, the imaging region video vBC is a video that expresses a scene that is actually viewed when the position of the camera 502 is set as a viewpoint according to the position, the imaging direction, the angle of view, and the like of the camera 502.

Specifically, 3D background data that is a three-dimensional (3D) model as a background is prepared, and the imaging region video vBC is sequentially rendered on the basis of the viewpoint position of the camera 502 with respect to the 3D background data in real time.

Note that the range of the imaging region video vBC is actually a range slightly wider than the range imaged by the camera 502 at the time point. This is to prevent the video of the outer frustum from being reflected due to a drawing delay and to avoid the influence of the diffracted light from the video of the outer frustum when the range of imaging is slightly changed by panning, tilting, zooming, or the like of the camera 502.

The video of the imaging region video vBC rendered in real time in this manner is combined with the video of the outer frustum. The video of the outer frustum used in the background video vB may be rendered in advance on the basis of the 3D background data or may be rendered in real time for each frame or each intermittent frame, and the video of the imaging region video vBC (inner frustum) is incorporated into a part of the video of the outer frustum to generate the entire background video vB.

Note that there is a case where the video of the outer frustum is also rendered for each frame similarly to the inner frustum, but here, a static video is taken as an example, and in the following description, a case where only the head frame of the video of the outer frustum is rendered will be mainly described as an example.

Therefore, even when the camera 502 is moved back and forth, or left and right, or zoom operation is performed, the background of the range imaged together with the performer 510 is captured as a video corresponding to a change in the viewpoint position or a field of view (FOV) accompanying the actual movement of the camera 502.

As illustrated in Figs. 2 and 3, the monitor video vM including the performer 510 and the background is displayed on the output monitor 503, and this is the captured video. The background of the monitor video vM is the imaging region video vBC. That is, the background included in the captured video is a real-time rendered video.

As described above, in the imaging system 500 of the embodiment, not only the background video vB is simply displayed in a planar manner but also the background video vB including the imaging region video vBC is changed in real time so that a video can be captured similar to that in a case where a scene is actually imaged.

Note that contrivance may also be made to reduce a processing load of the system by rendering only the imaging region video vBC as a range reflected by the camera 502 in real time instead of the entire background video vB displayed on the LED wall 505.

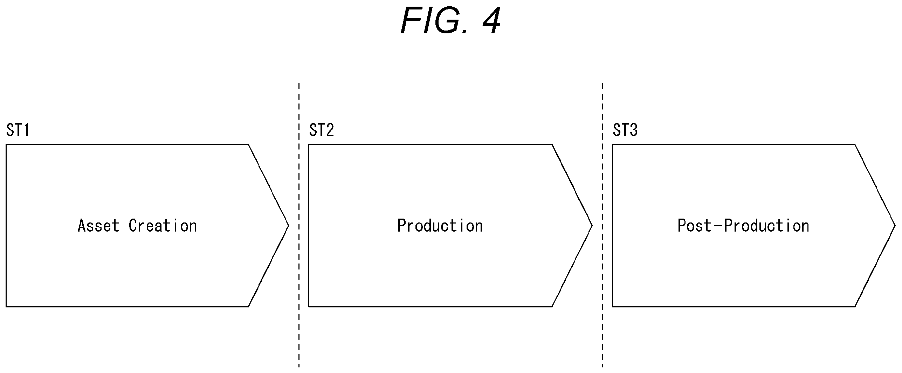

Here, a production step of video content as virtual production in which imaging is performed by the imaging system 500 will be described. As illustrated in Fig. 4, the video content producing step is roughly divided into three stages. The stages are asset creation ST1, production ST2, and post-production ST3.

The asset creation ST1 is a step of producing 3D background data for displaying the background video vB. As described above, the background video vB is generated by performing rendering in real time using the 3D background data at the time of imaging. For this purpose, 3D background data as a 3D model is produced in advance.

Examples of a method of producing the 3D background data include full computer graphics (CG), point cloud data scanning, and photogrammetry.

The full CG is a method of producing a 3D model with computer graphics. Among the three methods, the method requires the most man-hours and time, but is preferably used in a case where an unrealistic video, a video that is difficult to capture in practice, or the like is desired to be the background video vB.

The point cloud data scanning is a method of generating a 3D model based on the point cloud data by performing distance measurement from a certain position using, for example, LiDAR, capturing an image of 360 degrees from the same position with a camera, and placing color data captured by the camera on a point measured by LiDAR. Compared with the full CG, the 3D model can be created in a short time. Furthermore, it is easy to produce a 3D model with higher definition than that of photogrammetry.

The photogrammetry is a photogrammetry technology for analyzing parallax information from two-dimensional images obtained by imaging an object from a plurality of viewpoints to obtain dimensions and shapes. 3D model creation can be performed in a short time.

Note that point cloud information acquired by LIDAR may be used in the 3D data generation by the photogrammetry.

In the asset creation ST1, for example, a 3D model to be 3D background data is produced by using these methods. Of course, the above methods may be used in combination. For example, a part of the 3D model produced by the point cloud data scanning or photogrammetry is produced by CG and synthesized.

The production ST2 is a step of performing imaging in the imaging studio as illustrated in Fig. 1. Element technologies in this case include real-time rendering, background display, camera tracking, lighting control, and the like.

The real-time rendering is rendering processing for obtaining the imaging region video vBC at each time point (each frame of the background video vB) as described with reference to Figs. 2 and 3. This is to render the 3D background data produced in the asset creation ST1 from a viewpoint corresponding to the position of the camera 502 or the like at each time point.

In this way, the real-time rendering is performed to generate the background video vB of each frame including the imaging region video vBC, and the background video vB is displayed on the LED wall 505.

The camera tracking is performed to obtain imaging information with the camera 502, and tracks position information, an imaging direction, an angle of view, and the like of the camera 502 at each time point. By providing the imaging information including these to a rendering engine in association with each frame, real-time rendering according to the viewpoint position or the like of the camera 502 can be executed.

The imaging information is information linked with or associated with a video as metadata.

It is assumed that the imaging information includes position information of the camera 502 at each frame timing, a direction of the camera, an angle of view, a focal distance, a F value (aperture value), a shutter speed, and lens information.

The lighting control is to control the state of lighting in the imaging system 500, and specifically, to control the light amount, emission color, lighting direction, and the like of a light 580. For example, the lighting control is performed according to time setting of a scene to be imaged, setting of a place, and the like.

The post-production ST3 indicates various processing performed after imaging. For example, video correction, video adjustment, clip editing, video effect, and the like are performed.

As the video correction, color gamut conversion, color matching between cameras and materials, and the like may be performed.

As the video adjustment, color adjustment, luminance adjustment, contrast adjustment, and the like may be performed.

As the clip editing, cutting of clips, adjustment of order, adjustment of a time length, and the like may be performed as the clip editing.

As the video effect, the synthesis of a CG video or a special effect video or the like may be performed.

Next, a configuration of the imaging system 500 used in the production ST2 will be described.

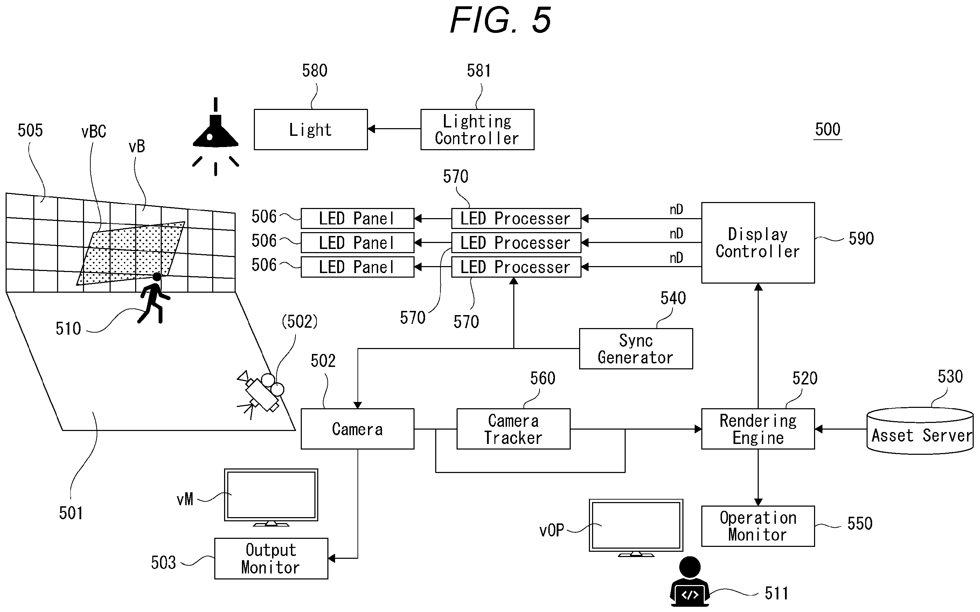

Fig. 5 is a block diagram illustrating a configuration of the imaging system 500 whose outline has been described with reference to Figs. 1, 2, and 3.

The imaging system 500 illustrated in Fig. 5 includes the above-described LED wall 505 including a plurality of the LED panels 506, the camera 502, the output monitor 503, and the light 580. Then, as illustrated in Fig. 5, the imaging system 500 further includes a rendering engine 520, an asset server 530, a sync generator 540, an operation monitor 550, a camera tracker 560, LED processors 570, a lighting controller 581, and a display controller 590.

Each of the LED processors 570 is provided corresponding to one or the plurality of LED panels 506, and performs video display drive of the corresponding one or the plurality of LED panels 506.

The sync generator 540 generates a synchronization signal for synchronizing frame timings of display videos by the LED panels 506 and a frame timing of imaging by the camera 502, and supplies the synchronization signal to the respective LED processors 570, the camera 502, and the rendering engine 520.

The camera tracker 560 generates imaging information from the camera 502 at each frame timing and supplies the imaging information to the rendering engine 520. For example, the camera tracker 560 detects the position information of the camera 502 relative to the position of the LED wall 505 or a predetermined reference position and the imaging direction of the camera 502 as one piece of the imaging information, and supplies them to the rendering engine 520.

As a specific detection method by the camera tracker 560, there is a method of randomly arranging reflectors on the ceiling and detecting a position from reflected light of infrared light emitted from the camera tracker 560 to the reflectors, the camera tracker 560 being assembled to the camera 502. Furthermore, as a detection method, there is also a method of estimating the self-position of the camera 502 by information of a gyro mounted on a camera platform of the camera 502 or a main body of the camera 502, or image recognition of a captured video of the camera 502.

Furthermore, the angle of view, the focal distance, the F value, the shutter speed, the lens information, and the like may be supplied from the camera 502 to the rendering engine 520 as the imaging information.

The asset server 530 is a server that can store the 3D model produced in the asset creation ST1, that is, 3D background data on a recording medium and read the 3D model as necessary. That is, the asset server functions as a database (DB) of 3D background data.

The rendering engine 520 performs processing of generating the background video vB to be displayed on the LED wall 505. For this reason, the rendering engine 520 reads necessary 3D background data from the asset server 530. Then, the rendering engine 520 generates a video of the outer frustum used in the background video vB as a video obtained by rendering the 3D background data in a form of being viewed from spatial coordinates designated in advance.

Furthermore, the rendering engine 520 specifies the viewpoint position and the like with respect to the 3D background data by using the imaging information supplied from the camera tracker 560 or the camera 502, and renders the imaging region video vBC (inner frustum).

Furthermore, the rendering engine 520 combines the imaging region video vBC dynamically changing according to movement of the camera 502 with the outer frustum to generate the background video vB as video data of one frame. Then, the rendering engine 520 transmits the generated video data of one frame to the display controller 590.

The display controller 590 generates divided video signals nD obtained by dividing the video data of one frame into video portions to be displayed on the respective LED panels 506, and transmits the divided video signals nD to the respective LED panels 506. At this time, the display controller 590 may perform calibration according to individual differences of color development or the like, manufacturing errors, and the like between display units.

Note that the display controller 590 may not be provided, and the rendering engine 520 may perform these processes. That is, the rendering engine 520 may generate the divided video signals nD, perform calibration, and transmit the divided video signals nD to the respective LED panels 506.

The LED processors 570 drives the respective LED panels 506 on the basis of the divided video signals nD respectively received, and thus the entire background video vB is displayed on the LED wall 505. The background video vB includes the imaging region video vBC rendered according to the position of the camera 502 or the like at that time point.

The camera 502 can image the performance of the performer 510 including the background video vB displayed on the LED wall 505 in this manner. The video obtained by imaging with the camera 502 is recorded on a recording medium in the camera 502 or an external recording device (not illustrated), and is supplied to the output monitor 503 in real time and displayed as a monitor video vM.

The operation monitor 550 displays an operation image vOP for controlling the rendering engine 520. An engineer 511 can perform necessary settings and operations for rendering the background video vB while viewing the operation image vOP.

The lighting controller 581 controls emission intensity, emission color, irradiation direction, and the like of the light 580. For example, the lighting controller 581 may control the light 580 asynchronously with the rendering engine 520, or may perform control in synchronization with the imaging information and the rendering processing. Therefore, the lighting controller 581 may perform light emission control in accordance with an instruction from the rendering engine 520, a master controller (not illustrated), or the like. Furthermore, the rendering engine 520 may control the light 580.

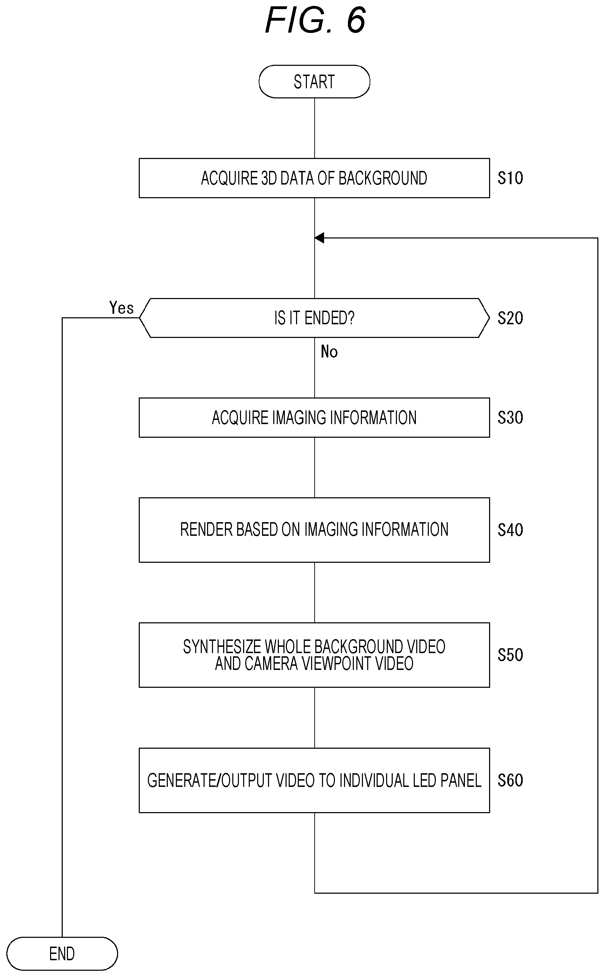

Fig. 6 illustrates a processing example of the rendering engine 520 in the imaging system 500 having such a configuration.

In step S10, the rendering engine 520 reads the 3D background data to be used this time from the asset server 530, and develops the 3D background data in an internal work area.

At this stage, a video used as the outer frustum may be generated.

Thereafter, the rendering engine 520 repeats the processing from step S30 to step S60 until it is determined in step S20 that the display is ended of the background video vB based on the read 3D background data.

In step S30, the rendering engine 520 acquires the imaging information from the camera tracker 560 and the camera 502. Thus, the position and state of the camera 502 to be reflected in the current frame are confirmed.

In step S40, the rendering engine 520 performs rendering on the basis of the imaging information. That is, the viewpoint position with respect to the 3D background data is specified on the basis of the position, the imaging direction, the angle of view, and the like of the camera 502 to be reflected in the current frame, and rendering is performed. At this time, video processing reflecting a focal distance, an F value, a shutter speed, lens information, and the like can also be performed. By this rendering, it is possible to obtain video data as the imaging region video vBC (inner frustum). The outer frustum is generated in advance as a fixed video in step S10, or may be generated for each frame in step S40.

In step S50, the rendering engine 520 performs processing of synthesizing the outer frustum as the entire background video, and the video reflecting the viewpoint position of the camera 502, that is, the imaging region video vBC. For example, the processing is to synthesize a video generated by reflecting the viewpoint of the camera 502 with a video of the entire background rendered at a specific reference viewpoint. Thus, the background video vB of one frame displayed on the LED wall 505, that is, the background video vB including the imaging region video vBC is generated.

The processing in step S60 is performed by the rendering engine 520 or the display controller 590. In step S60, the rendering engine 520 or the display controller 590 generates the divided video signals nD obtained by dividing the background video vB of one frame into videos to be displayed on the individual LED panels 506. Calibration may be performed. Then, the divided video signals nD are transmitted to the LED processors 570, respectively.

In the above-described processing, the background video vB including the imaging region video vBC captured by the camera 502 is displayed on the LED wall 505 at each frame timing.

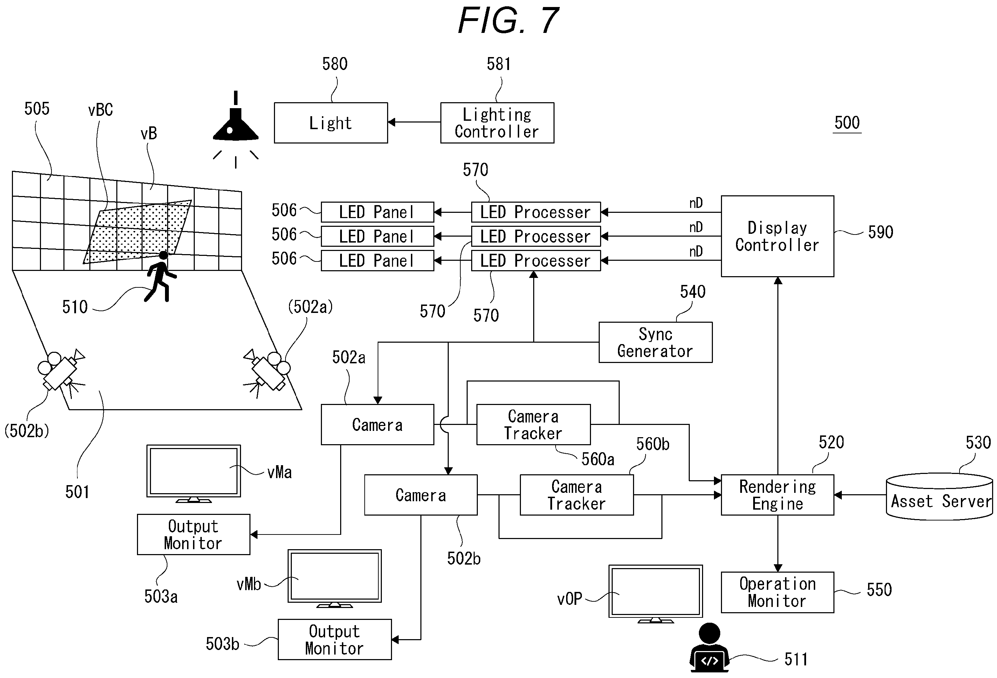

By the way, only one camera 502 is illustrated in Fig. 5, but imaging can be performed by a plurality of cameras 502. Fig. 7 illustrates a configuration example in a case where a plurality of cameras 502a and 502b is used. The cameras 502a and 502b can independently perform imaging in the performance area 501. Furthermore, synchronization between the cameras 502a and 502b and the LED processors 570 is maintained by the sync generator 540.

Output monitors 503a and 503b are provided corresponding to the cameras 502a and 502b, respectively, and are configured to display the videos captured by the corresponding cameras 502a and 502b as monitor videos vMa and vMb, respectively.

Furthermore, camera trackers 560a and 560b are provided corresponding to the cameras 502a and 502b, respectively, and detect the position and imaging direction of each of the corresponding cameras 502a and 502b. The imaging information from the camera 502a and the camera tracker 560a and the imaging information from the camera 502b and the camera tracker 560b are transmitted to the rendering engine 520.

The rendering engine 520 can perform rendering for obtaining the background video vB of each frame by using the imaging information on one or both of the camera 502a side or the camera 502b side.

Note that although Fig. 7 illustrates an example using the two cameras 502a and 502b, it is also possible to perform imaging using three or more cameras 502.

However, when a plurality of the cameras 502 is used to render and display the imaging region videos vBC (inner frustum) corresponding to the respective cameras 502 by using the respective pieces of imaging information, there is a circumstance that the imaging region videos vBC interfere with each other. For example, in the example in which the two cameras 502a and 502b are used as illustrated in Fig. 7, the imaging region video vBC corresponding to the camera 502a is illustrated, but in a case where the video by the camera 502b is used, the imaging region video vBC corresponding to the camera 502b is also necessary. In that case, when the imaging region videos vBC corresponding to the respective cameras 502a and 502b are simply displayed, they interfere with each other. Therefore, it is necessary to contrive the display of the imaging region video vBC.

### <2. Configuration of Information Processing Device>

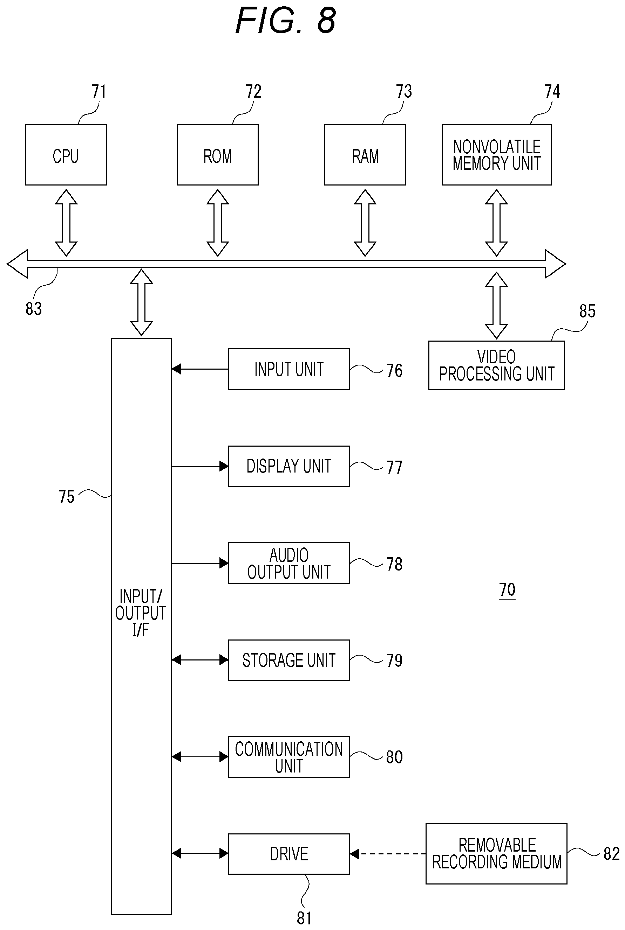

Next, a configuration example of an information processing device 70 that can be used in the asset creation ST1, the production ST2, and the post-production ST3 will be described with reference to Fig. 8.

The information processing device 70 is a device capable of performing information processing, particularly video processing, such as a computer device. Specifically, a personal computer, a workstation, a portable terminal device such as a smartphone and a tablet, a video editing device, and the like are assumed as the information processing device 70. Furthermore, the information processing device 70 may be a computer apparatus configured as a server apparatus or a calculation apparatus in cloud computing.

In the case of the present embodiment, specifically, the information processing device 70 can function as a 3D model creation device that creates a 3D model in the asset creation ST1.

Furthermore, the information processing device 70 can also function as the rendering engine 520 and the asset server 530 constituting the imaging system 500 used in the production ST2.

Furthermore, the information processing device 70 can also function as a video editing device configured to perform various types of video processing in the post-production ST3.

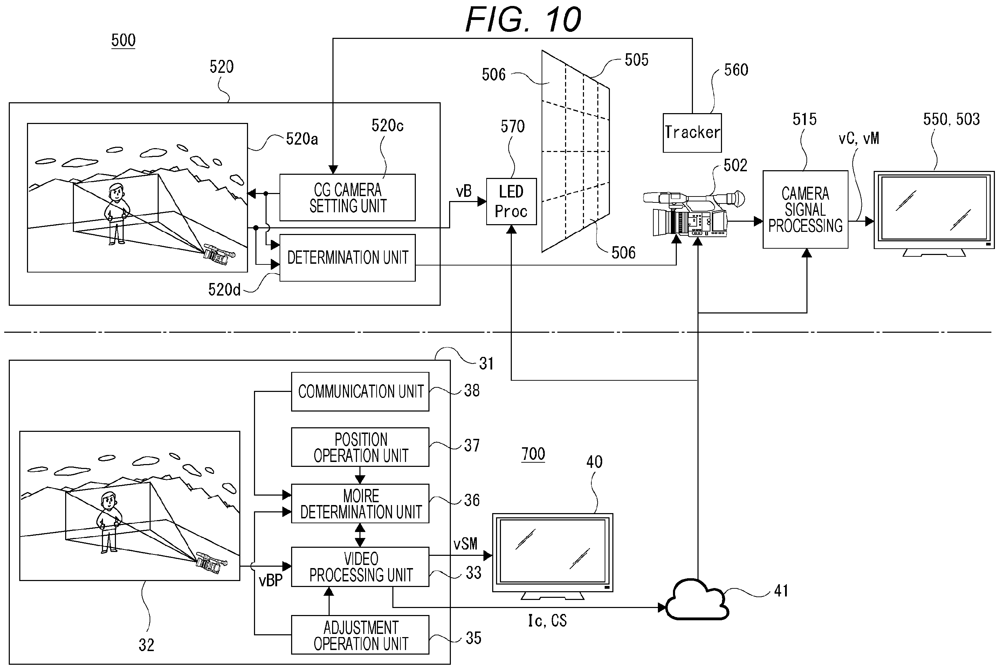

Furthermore, the information processing device 70 can also function as an information processing device (rendering engine 31) that generates a simulation video vSM in pre-visualization described later with reference to Fig. 10 and the like.

A CPU 71 of the information processing device 70 illustrated in Fig. 8 executes various kinds of processing in accordance with a program stored in a nonvolatile memory unit 74 such as a ROM 72 or, for example, an electrically erasable programmable read-only memory (EEP-ROM), or a program loaded from a storage unit 79 to a RAM 73. The RAM 73 also appropriately stores data and the like necessary for the CPU 71 to execute the various types of processing.

A video processing unit 85 is configured as a processor that performs various types of video processing. The processor is a processor capable of performing any one or a plurality of pieces of processing of, for example, 3D model generation processing, rendering, DB processing, video processing including color/luminance adjustment processing, video editing processing, video analysis/detection processing, and the like.

The video processing unit 85 can be implemented by, for example, a CPU, a graphics processing unit (GPU), general-purpose computing on graphics processing units (GPGPU), an artificial intelligence (AI) processor, or the like that is separate from the CPU 71.

Note that the video processing unit 85 may be provided as a function in the CPU 71.

The CPU 71, the ROM 72, the RAM 73, the nonvolatile memory unit 74, and the video processing unit 85 are connected to one another via a bus 83. An input/output interface 75 is also connected to the bus 83.

An input unit 76 including an operation element or an operation device is connected to the input/output interface 75. For example, as the input unit 76, various operation elements and operation devices are assumed such as a keyboard, a mouse, a key, a trackball, a dial, a touch panel, a touchpad, a grating panel, and a remote controller.

The input unit 76 detects operation by a user, and the CPU 71 interprets a signal corresponding to the input operation.

A microphone is also assumed as the input unit 76. It is also possible to input voice uttered by the user as operation information.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various displays, and includes, for example, a display device provided in a housing of the information processing device 70, a separate display device connected to the information processing device 70, and the like.

The display unit 77 performs display of various images, operation menus, icons, messages, and the like, that is, display as a graphical user interface (GUI), on a display screen on the basis of an instruction from the CPU 71.

In some cases, the storage unit 79 including a hard disk drive (HDD), a solid-state memory, or the like or a communication unit 80 is connected to the input/output interface 75.

The storage unit 79 can store various data and programs. A DB can also be configured in the storage unit 79.

For example, in a case where the information processing device 70 functions as the asset server 530, or the rendering engine 31 to be described later, a DB that stores a 3D background data group can be constructed by using the storage unit 79.

The communication unit 80 performs communication processing via a transmission path such as the Internet, wired/wireless communication with various devices such as an external DB, an editing device, and an information processing device, bus communication, and the like.

For example, in a case where the information processing device 70 functions as the rendering engine 520, or the rendering engine 31 to be described later, it is possible to access the DB as the asset server 530, and receive imaging information from the camera 502 or the camera tracker 560, by the communication unit 80.

Furthermore, also in a case of the information processing device 70 used in the post-production ST3, the communication unit 80 can access the DB as the asset server 530 or the like.

A drive 81 is also connected to the input/output interface 75, as necessary, and a removable recording medium 82 such as a magnetic disk, an optical disk, a magneto-optical disk, a semiconductor memory, or the like is appropriately mounted.

The drive 81 can read video data, various computer programs, and the like from the removable recording medium 82. The read data is stored in the storage unit 79, and video and audio included in the data are output by the display unit 77 and the audio output unit 78. Furthermore, the computer program and the like read from the removable recording medium 82 are installed in the storage unit 79, as necessary.

In the information processing device 70, for example, software for the processing in the present embodiment can be installed via network communication by the communication unit 80 or the removable recording medium 82. Alternatively, the software may be stored in advance in the ROM 72, the storage unit 79, or the like.

### <3. Configuration including Artifact Determination Unit>

Hereinafter, a configuration example of the information processing device 70 including a determination unit that determines occurrence of an artifact such as moire will be described.

Such an information processing device 70 may be the information processing device 70 such as the rendering engine 520 in the imaging system 500 as illustrated in Figs. 5 and 7, or may be the information processing device 70 used in a pre-visualization system 700 described in Fig. 10.

When the LED wall 505 is imaged by the camera 502 in the imaging system 500, an artifact such as moire (moire, grid, color shift, etc.) occurs due to interference between pixels of the image sensor of the camera 502 and pixels of the LED panel 506.

In order to avoid moire or the like, the camera 502 needs to blur the LED panel 506 without focusing. However, changing the positions of the camera 502 and the performer 510 or adjusting the lens at the actual imaging site deteriorates the efficiency of video production.

Therefore, in the present embodiment, the information processing device 70 including a determination unit that performs processing of determining occurrence of moire or the like is used in the imaging system 500 and the pre-visualization system 700.

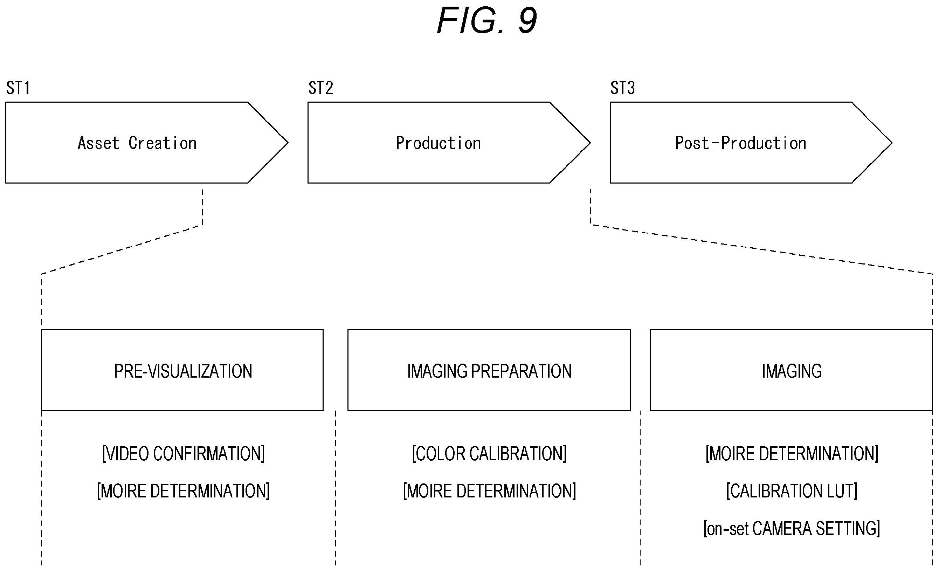

First, positioning of the pre-visualization in a video production process will be described with reference to Fig. 9.

Fig. 9 illustrates a flow of the asset creation (ST1), the production (ST2), and the post-production (ST3) described above with reference to Fig. 4.

The production (ST2) is a stage where imaging is actually performed in a studio, but this is divided into imaging preparation and imaging.

It is assumed that the pre-visualization is mainly performed at a stage before imaging preparation. Note that the order in time series is not necessarily limited, but the pre-visualization is only required to be performed at a stage after the 3D model for rendering the background video vB is produced in the asset creation (ST1).

In this sense, the pre-visualization may be considered to be performed at the final stage of the asset creation (ST1), or may be considered to be performed at a stage before the imaging preparation in the production (ST2).

In the pre-visualization, processing of video confirmation and moire determination is performed. The video confirmation is processing for enabling a director or a staff member, before capturing, to confirm a captured video vC obtained by capturing. The confirmation including the color tone of the captured video vC is mainly enabled by the simulation video.

The moire determination is, for example, processing performed when the staff member virtually operates the camera position while confirming the video. In a case where moire or the like is predicted to appear by moire determination, the warning can be issued. Therefore, this makes it possible to avoid occurrence of artifacts at the time of subsequent imaging.

At a stage of the imaging preparation, color calibration is performed together with various settings for the LED, the camera, and the like in the imaging system 500. Specifically, a calibration look up table (LUT) is generated that cancels a color change occurring when the LED wall 505 is imaged by the camera 502. The calibration LUT is, for example, a 3D-LUT.

Note that, instead of the 3D-LUT, a combination of a matrix and a 1D-LUT, or preparation for calibration performed in other video signal processing may be performed.

Moire determination and moire alert according to the moire determination can be performed even at the stage of imaging preparation. That is, moire determination can be performed by specifying the actual model of the LED panel 506 and the camera 502 at the stage of imaging preparation and setting the position and direction of the camera 502.

At the stage of imaging, moire determination, calibration LUT, and on-set camera setting are performed.

The moire determination in this case is moire determination by the rendering engine 520. The moire alert can be output to the camera operator 512 or the like in real time according to the determination.

The calibration LUT is processing of canceling a color change related to background video display by the LED wall 505, the camera 502, or the like by applying an LUT generated by color calibration in the imaging preparation.

The on-set camera setting is processing of acquiring a camera setting set in the pre-visualization from, for example, a cloud server or the like and reflecting the camera setting in the camera 502 of the studio.

A configuration example as an embodiment will be described with reference to Fig. 10. Note that, in Fig. 10, the configuration of the imaging system 500 and the configuration for pre-visualization are described in parallel.

An upper part of the drawing illustrates a simplified configuration of the imaging system 500 described in Fig. 5 and the like, and a lower part of the drawing illustrates a configuration (pre-visualization system 700) used in pre-visualization.

In Fig. 10, regarding the imaging system 500, the rendering engine 520, the LED processor 570, the LED wall 505 including the plurality of LED panels 506, the camera 502, the camera signal processing unit 515, the operation monitor 550, or the output monitor 503 are illustrated.

The operation monitor 550 or the output monitor 503 in this drawing comprehensively indicates a monitor that displays the captured video vC and the monitor video vM in the studio that is an imaging site. Hereinafter, the monitors are abbreviated as "monitor 550 and the like" for the sake of description.

The rendering engine 520 is illustrated as including a rendering unit 520a, a CG camera setting unit 520c, and a determination unit 520d.

As described above, the rendering unit 520a has a function of rendering the inner frustum (imaging region video) vBC according to the positions of the outer frustum and the camera 502 and the imaging direction, and generating the background video vB to be displayed on the LED wall 505. That is, the rendering unit 520a is a function of performing the processing of Fig. 6.

The CG camera setting unit 520c and the determination unit 520d in the rendering engine 520 will be described later.

Note that the rendering engine 520 may have a color calibration function. The color calibration function is a function of performing color conversion for canceling color changes caused by processing of the LED processor 570, LED light emission characteristics of the LED panel 506 constituting the LED wall 505, light reception characteristics of the camera, processing, and the like.

That is, the rendering unit 520a may perform color conversion on the rendered background video vB using the LUT generated by the color calibration at the stage of imaging preparation.

In a case where color conversion using the calibration LUT is performed in the rendering engine 520 in this manner, for example, it can be assumed that no color change occurs on the display side of the background video vB.

Note that the color change here is a color change caused by processing or light emission characteristics until the rendered background video vB is displayed on the LED wall 505, or light reception characteristics or processing or the like of the camera.

In a case where the rendering engine 520 does not have the color calibration function, or in a case where the function is not enabled even if the rendering engine has the function, there is a case where a change occurs due to color tone, that is, color shading, RGB balance, or the like between a color in a state of being rendered from the 3D model and a color in a state of being displayed on the LED wall 505.

Fig. 10 illustrates the camera signal processing unit 515 that performs signal processing of a captured video signal for the camera 502. Although omitted in Figs. 5 and 7, the camera signal processing unit 515 may be formed by a processor or the like in the camera 502, or may be provided as a device of a separate unit from the camera 502.

The video signal captured by the camera 502 is subjected to development processing including luminance processing, color processing, and the like, resizing processing, and the like by the camera signal processing unit 515, and is output as the captured video vC or the monitor video vM.

The captured video vC is recorded as a main line video on a recording medium or transmitted to another device for broadcasting or distribution. Furthermore, the captured video vC is used as the monitor video vM and displayed on the monitor 550 and the like.

For the imaging system 500 as described above, for example, the pre-visualization system 700 is configured as a system outside the studio. The pre-visualization system 700 includes at least the information processing device 70 that functions as the rendering engine 31 and a monitor 40.

The rendering engine 31 includes, for example, the information processing device 70 separate from the rendering engine 520.

The rendering engine 31 includes a rendering unit 32 and a video processing unit 33.

The rendering unit 32 has a rendering function similar to that of the rendering unit 520a in the rendering engine 520 described above, and can generate a background video vBP on the basis of the 3D model.

The rendering unit 32 can perform rendering of the background video vB by using at least the 3D model produced in the asset creation (ST1) step. That is, the same 3D model as that used in the production (ST2) step is acquired from, for example, the asset server 530 (see Figs. 5 and 7), and rendering is performed using the 3D model.

Then, the rendering unit 32 renders the inner frustum, for example, using the 3D model. Note that, in a case where the inner frustum (imaging region video vBC) is generated, any camera position and direction are input, and rendering can be performed at a viewpoint position with respect to the 3D model according to the input camera position and direction.

The background video generated by the rendering unit 32 is referred to as the "background video vBP" in the sense of being distinguished from the imaging region video vBC generated by the rendering engine 520 at the time of imaging for the sake of description.

The video processing unit 33 indicates a function of performing various types of video processing on the background video vBP.

The video processing unit 33 performs actual-captured video conversion processing as one of types of video processing. The actual-captured video conversion processing is processing of generating the simulation video vSM imitating the camera 502 actually used for imaging. In the actual-captured video conversion processing, the simulation video vSM is generated for the background video vBP by using at least a processing parameter that achieves a characteristic of luminance or color at the time of imaging by the camera 502 used in the imaging system 500.

By setting the parameter related to the luminance or the color to be the same as that of the camera 502 at the time of imaging, the simulation video vSM having the same color tone as that of the captured video vC is generated, and the simulation video vSM is displayed on the monitor 40.

The monitor 40 indicates a monitor device that displays a video output from the information processing device 70 as the rendering engine 31, and may be, for example, a monitor device in a place different from the imaging studio or a monitor device in the imaging studio. The monitor 40 may have any form as long as it displays the simulation video vSM at least at a stage of the pre-visualization.

In the rendering engine 31, the rendering unit 32 generates the background video vBP, and the video processing unit 33 performs the actual-captured video conversion processing to generate the simulation video vSM. By displaying this on the monitor 40, the staff member can confirm the simulation video vSM having the same color tone as the background video included in the captured video vC at the time of imaging. Therefore, it is possible to confirm the color prior to imaging and adjust the color in the camera 502 or the camera signal processing unit 515 at the stage of imaging preparation as necessary.

In the case of the imaging system 500 using the virtual background video vB like the virtual production of the present embodiment, the color tone and the like of the captured video vC actually captured by the camera 502 may be different from what the director or the staff member envisioned. In such a case, it is necessary to adjust the color tone by performing various setting changes and the like in a studio or the like as an imaging site, which is an extremely troublesome and time-consuming work in reality. This deteriorates the efficiency of video production. Therefore, it is extremely useful to enable the pre-visualization system 700 to confirm a video having the same color tone as the actual captured video vC before imaging.

As the actual-captured video conversion processing by the video processing unit 33, at least the color tone of the background video vBP rendered by the rendering unit 32 is set to be equivalent to the video of the background included in the captured video vC at the time of actual imaging.

For this purpose, specifically, the video processing unit 33 adjusts parameters such as RGB gains, a white balance value, a gamma value, and an offset value to those of the camera 502.

For example, the video processing unit 33 performs processing of giving R, G, and B gains similar to values of gains for pixel signals of respective colors read from an image sensor in the camera 502 to the background video vBP.

Furthermore, the video processing unit 33 performs white balance processing on the background video vBP with the same white balance value as the white balance value at the time of imaging by the camera 502 in the actual-captured video conversion processing.

Moreover, parameters such as spectral transmittances of optical components placed on the optical path, for example, a lens, a color conversion filter, an ND filter, an optical low-pass filter, a color separation prism, and the like, spectral transmittances of an on-chip color filter of an image sensor, an on-chip lens, and the like, and spectral sensitivity characteristics of a photodiode of the image sensor are also taken into consideration. Specifically, the parameter is obtained by integrating the spectral characteristic of the LED of the LED panel 506, the spectral transmittance when a diffusion plate, an antireflection film, a protective film, or the like is attached to the LED panel, and the product of the spectral transmittance and the spectral sensitivity characteristic with the wavelength. Then, color processing according to the parameter is performed.

As a result, the simulation video vSM serving as the background having the same color tone as the background in the captured video vC is obtained. As a result, on the monitor 40, it is possible to confirm a video having the same color tone as that in a case where the captured video vC is viewed on the monitor 550 and the like at the time of imaging.

Moreover, as the actual-captured video conversion processing, the video processing unit 33 may perform processing of making the angle of view the same of the background video vBP by the cutout range from the image sensor of the camera 502, zoom magnification setting, and the like.

Furthermore, the video processing unit 33 may perform processing of reflecting the lens distortion characteristic of the camera 502 on the background video vBP as the actual-captured video conversion processing. As a result, the simulation video vSM is brought closer to the captured video vC.

Meanwhile, in a case where the color change up to the LED wall 505 is canceled by color calibration processing in the rendering engine 520 at the time of imaging, the actual-captured video conversion processing may be processing of reflecting the color change or the like on the camera side. This is because it is assumed that the background video vB displayed on the LED wall 505 has no color change from a rendered state.

On the other hand, in a case where the color calibration as described above is not performed, there is a case where the color change has already occurred in the background video vB displayed on the LED wall 505. In such a case, in the actual-captured video conversion processing in the video processing unit 33, processing of reflecting luminance (intensity) characteristics and the like of respective colors on the LED side is also performed. As a result, the simulation video vSM can be brought close to the captured video vC.

Note that, as a premise of the above-described actual-captured video conversion processing, camera settings such as a frame rate, a shutter speed, and an exposure value of a virtual camera assumed when the rendering engine 31 renders the simulation video vSM are similar to those of the actual camera 502. That is, the video processing unit 33 generates the simulation video vSM imitating the color tone of the actual captured video vC by performing color processing such as the RGB gains and the white balance value after setting the background video vBP to have RGB values according to various camera settings such as the frame rate, the shutter speed, the exposure value, and neutral density (ND) setting.

Furthermore, brightness of the LED wall 505 may be reflected similarly to the camera settings.

The rendering engine 31 includes an adjustment operation unit 35 that can be used for a color adjustment operation by a user such as a staff member.

For example, a GUI or the like using the display unit 77 or the input unit 76 of the information processing device 70 serving as the rendering engine 31 is provided to the user. As a result, the user can operate the color tone of the video while viewing the monitor 40.

That is, in a case where the staff member views the simulation video vSM by the actual-captured video conversion processing and feels that the color tone is different from intended color tone, the staff performs color adjustment to obtain a desired color.

Furthermore, the content of adjustment is provided as the color conversion information Ic to the camera 502 and the camera signal processing unit 515 via a cloud server 41, for example, so that the adjusted color can be reflected at the time of imaging. The color conversion information Ic is, for example, an LUT or a color decision list (CDL).

Note that the video processing unit 33 may transmit the color conversion information Ic to the camera 502 or the camera signal processing unit 515 without going through the cloud server 41.

Furthermore, the adjustment operation unit 35 may allow the user to perform an operation of changing and setting various camera settings. The video processing unit 33 performs change processing of the camera settings reflected in the simulation video vSM according to the input, and can output camera setting information CS.

The camera setting information CS mentioned here indicates, for example, reading size setting from the image sensor of the camera 502, shutter speed setting, exposure setting, ND setting, lens characteristics, focus/iris/zoom operation setting, white balance value, RGB gains, and the like.

In the above-described actual-captured video conversion processing, basically, these setting values are adjusted to the settings of the camera 502 used for imaging, whereby the actual captured video vC is simulated.

Then, by adjusting these camera settings, various camera settings can be prepared in advance.

Then, the video processing unit 33 can store and transmit the camera setting information CS indicating the camera settings changed according to the operation. For example, the camera setting information CS according to the adjustment operation of the operator is uploaded to the cloud server 41, and can be reflected in the camera 502 or the like at the time of imaging later.

Moreover, the rendering engine 31 includes a determination unit 36, a position operation unit 37, and a communication unit 38, and can perform moire determination and moire alert processing.

The position operation unit 37 is an interface function that enables the user to arbitrarily operate a virtual camera position.

The determination unit 36 is a function of determining whether or not moire occurs by a specific algorithm in the state of the set camera position.

The algorithm, which will be described in detail later, is an algorithm for determining that an artifact such as a moire or a scan line occurs when an image is actually captured.

The determination unit 36 performs determination processing using various types of information acquired by the communication unit 38, information of a virtual camera position operated by the position operation unit 37, and information input by the user from the adjustment operation unit 35.

Specifically, the determination unit 36 determines occurrence of an artifact such as a moire by using an interval (an interval between LEDs adjacent to each other) of LEDs which are light emitting elements of the LED panel 506 used for imaging, a pixel interval (an interval between pixels adjacent to each other) of an image sensor of the camera 502 used for imaging, characteristics of an optical LPF, a focal distance of a lens, an F value, and a focusing distance, and a value of a distance between the LED panel 506 and the camera 502.

Note that, since the actual LED panel 506 and the camera 502 do not exist in the pre-visualization stage, the value of the distance between the LED panel 506 and the camera 502 is a virtual value according to the operation of the position operation unit 37.

For this reason, the communication unit 38 communicates with, for example, the LED panel 506, the camera 502, and the like actually used for imaging, acquires values such as the LED interval, the pixel interval of the image sensor, and the characteristics of the optical LPF, and provides the acquired values to the determination unit 36. Regarding the LED interval, the pixel interval of the image sensor, the characteristics of the optical LPF, and the like, the communication unit 38 may communicate with the LED panel 506 and the camera 502 to obtain information such as a model and a model number, and the determination unit 36 may refer to the internal DB and acquire the respective values according to the model.

Furthermore, the determination unit 36 may acquire each of the above values in response to the user inputting a specific value or a model.

Furthermore, the determination unit 36 acquires the focal distance, the F value, and the focusing distance in accordance with camera settings, operations, and the like of the virtual camera by the user, and uses them for determination processing.

Furthermore, the determination unit 36 can obtain a value of the distance between the LED panel 506 and the camera 502 according to the camera position according to the operation of the position operation unit 37, and use the value for determination.

In a case where the occurrence of the moire is predicted in the determination processing, the determination unit 36 notifies the video processing unit 33 of information on the occurrence of the moire, information on the occurrence position, and the like.

The video processing unit 33 causes the monitor 40 to display a video indicating a moire warning or a moire position, for example.

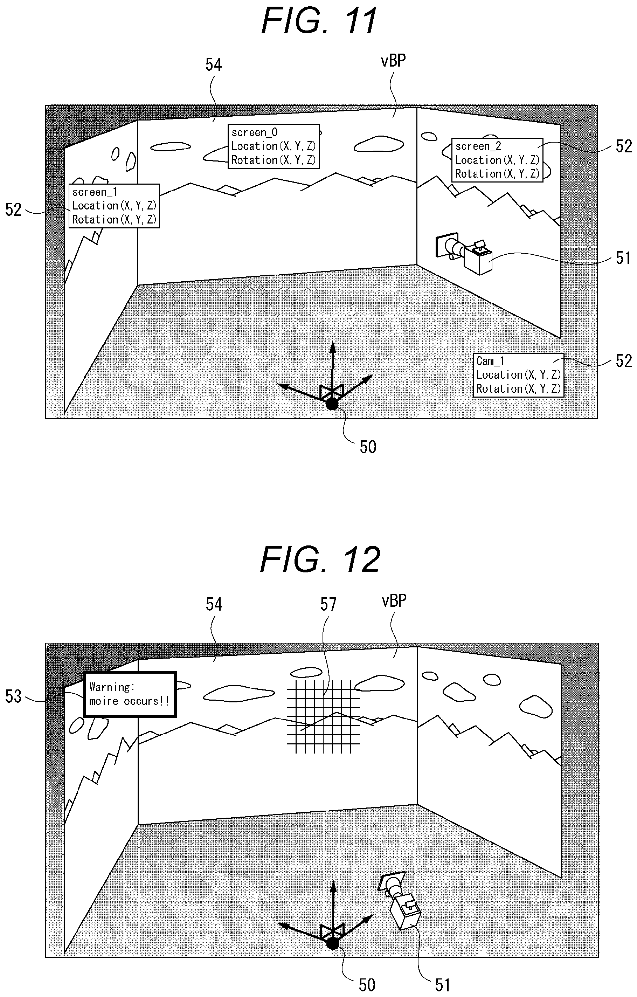

For example, Fig. 11 illustrates a video including the simulation video vSM of the background video vBP, and is an image further illustrating a virtual LED wall 54 and a virtual camera 51.

The video processing unit 33 is enabled to display not only the simulation video vSM of the background video vBP simply but also a video in which the viewpoint position is set to a certain position in the studio, for example.

In the video in Fig. 11, position information 52 on the LED wall 54 and position information 52 on the camera are further displayed.

Furthermore, as origin information 50, an origin position serving as a reference of each position in the space and three axial directions of X, Y, and Z are illustrated.

Fig. 12 is an example in which a moire alert 53 is displayed and a moire position 57 is shown.

For example, a position of the camera 51 is changed from that in Fig. 11, but it is assumed that moire generation prediction is performed in this state. In this case, the moire alert 53 is displayed, and a position where moire occurs is displayed as the moire position 57.

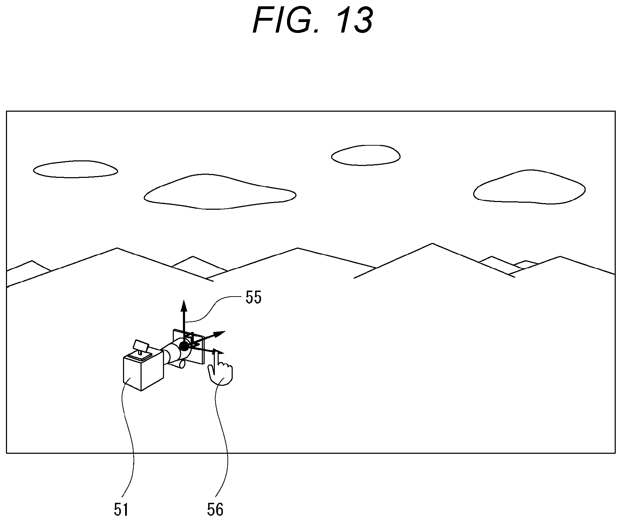

The position of the camera 51 on the video can be arbitrarily changed by the user. For example, when the user performs operation to designate the camera 51, movement axes 55 in the X, Y, and Z directions are displayed as illustrated in Fig. 13. When the user performs operation such as dragging while aligning a cursor 56 with a certain movement axis 55, the position of the camera 51 in the virtual space is changed. For example, a user interface as described above is provided by the function of the position operation unit 37.

Thus, the user can confirm whether or not moire occurs while arbitrarily moving the virtual camera 51.

Therefore, it is also possible to set the camera position and the camera path at the time of actual imaging so as not to cause moire.

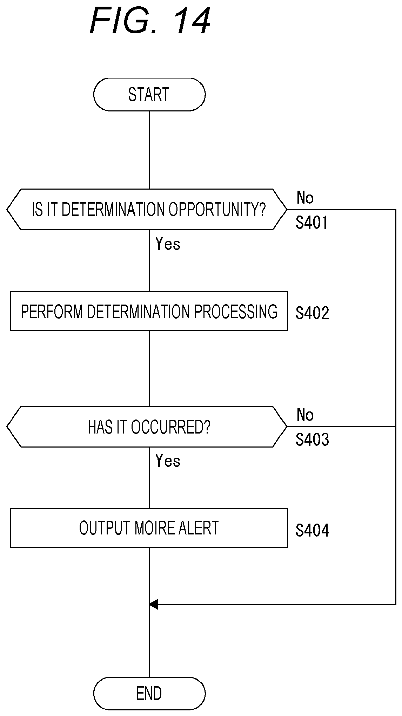

Fig. 14 illustrates processing related to determination of moire and the like by the rendering engine 31.

In step S401, the rendering engine 31 monitors whether or not it is a determination opportunity.

For example, it is monitored whether or not a camera position operation has been performed.

In a case where the user performs the camera position operation by the function of the position operation unit 37, the rendering engine 31 proceeds to step S402 and performs determination processing using information on the changed camera position and imaging direction. That is, the determination processing is performed using the LED interval, the pixel interval of the image sensor, the characteristics of the optical LPF, the focal distance, the F value, the focusing distance, and the value of the distance between the LED panel 506 and the camera 502 acquired at that time. The distance between the LED panel 506 and the camera 502 is obtained by calculating a virtual positional relationship according to the camera position operation of the user.

Furthermore, the determination opportunity monitored in step S401 is not limited to the camera position operation. For example, even in a case where a zoom operation, a focus operation, an exposure adjustment operation, or the like is performed as a virtual camera operation, the process may proceed to step S402.

That is, as an element used for the determination processing, an opportunity in which any one of the focal distance, the F value, the focusing distance, the distance between the LED panel 506 and the camera 502, and the like changes although the interval of the LEDs, the pixel interval of the image sensor, and the characteristics of the optical LPF do not normally change may be used as a determination opportunity.

In step S403, the rendering engine 31 confirms a result of the determination processing, and in a case where it is determined that moire or the like occurs, processing of outputting a moire alert is performed in step S404.

As described above, the moire alert 53 as illustrated in Fig. 12 is displayed, so that the staff member can know the occurrence of moire or the like at a stage before imaging. Thus, it is possible to consider a camera position and a camera path that do not cause moire or the like before actual imaging.

Meanwhile, Fig. 10 illustrates the CG camera setting unit 520c and the determination unit 520d in addition to the rendering unit 520a on the rendering engine 520 side.

As a result, the rendering engine 520 can perform moire determination at the time of imaging preparation or at the time of actual imaging.

The CG camera setting unit 520c receives the imaging information from the camera tracker 560, for example, the position, the imaging direction, the angle of view, the focal distance, the F value, the shutter speed, the lens information, and the like of the camera 502, and causes the rendering unit 520a to execute rendering corresponding thereto.

The determination unit 520d performs determination processing on whether or not moire or the like is currently generated for the rendered imaging region video vBC by using the information obtained by the CG camera setting unit 520c. That is, the determination unit 520d determines the occurrence of the current moire or the like using an algorithm similar to that of the determination unit 36 described above.

Then, in a case where it is determined that moire or the like is generated, for example, information thereon is transmitted to the camera 502, and it is caused to display the moire alert on a viewfinder or the like.

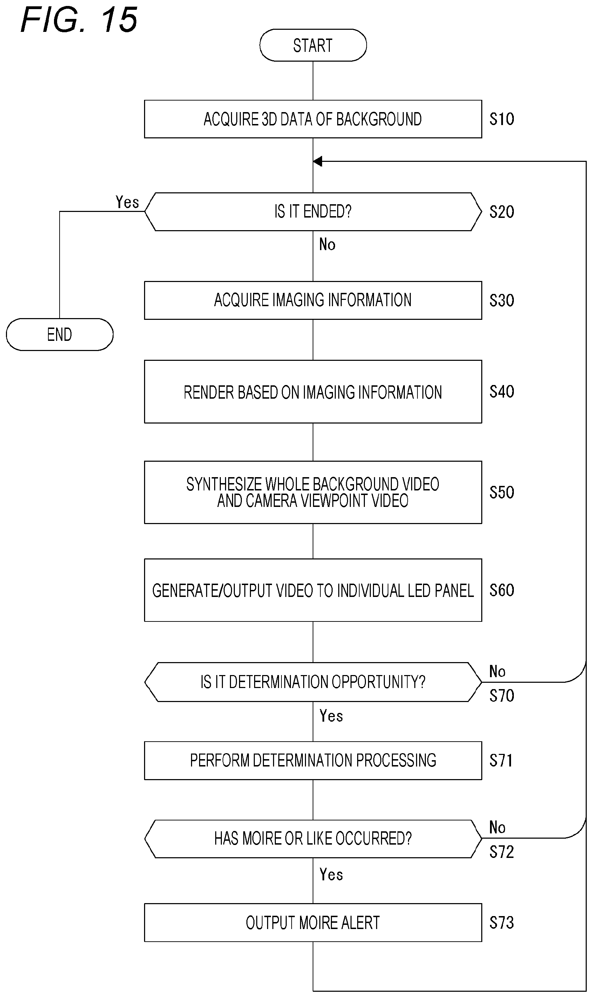

Fig. 15 illustrates an example of processing of performing such real-time moire alert. Note that, in Fig. 15, in addition to step S10 to step S60 described in Fig. 6, step S70 and subsequent steps are performed.

As described above, the rendering engine 520 performs the processing from step S30 to step S60 for each frame timing. As a result, the background video vB is displayed on the LED wall 505.

In step S70, the rendering engine 520 monitors whether or not it is a determination opportunity. Similarly to step S401 in Fig. 14 described above, in this case, for example, the position of the camera 502 acquired from the actual camera tracker 560 and the imaging information are acquired to check whether or not it is a determination opportunity.

Then, if it is a determination opportunity, the process proceeds to step S71 and determination processing is performed.

Note that the determination processing may be performed every frame without performing the check in step S70.

In step S72, the rendering engine 520 checks the result of the determination processing, and in a case where it is determined that moire or the like has occurred, processing of outputting a moire alert is performed in step S73. For example, the rendering engine 520 transmits information on the moire alert to the camera 502 so that the moire alert is displayed on the viewfinder or the like. Alternatively, the moire alert may be displayed on the monitor 550 and the like.

As described above, the camera operator 512 can recognize that moire is currently generated during imaging and deal with that. It is possible to deal with that by moving the camera position or performing focus adjustment, for example.

The above processing is determination processing during imaging, but similar processing can be performed during imaging preparation in the imaging system 500. Furthermore, even in a period in which the background video vB is not rendered, that is, in a period in which the background video vB is not displayed on the LED wall 505 during imaging preparation or the like, it is also possible to determine whether or not moire or the like occurs according to the position of the camera 502. This is because the LED interval of the LED panel 506, the pixel interval of the image sensor of the camera 502, and the characteristics of the optical LPF can be acquired in advance, and the focal distance of the lens of the camera 502, the F value, the focusing distance, and the distance between the LED panel 506 and the camera 502 can be acquired as imaging information from the camera tracker 560.

### <4. Determination Processing>

Determination processing executed by the determination unit 36 and the determination unit 520d as described above will be described in detail.

First, calculation of the size of an image formed on an image sensor of a camera will be described.

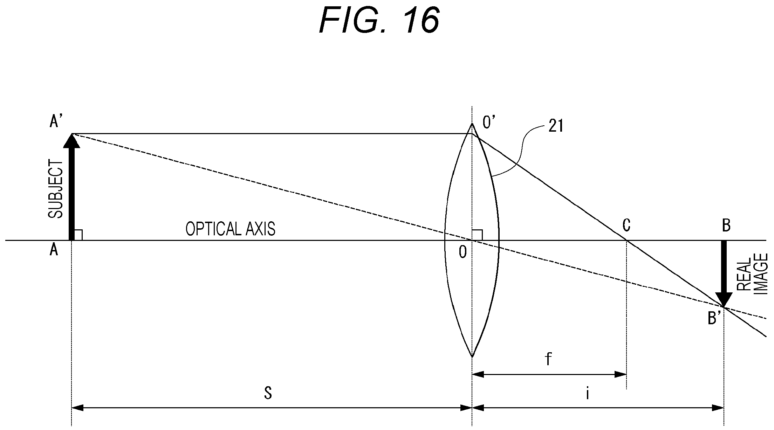

Fig. 16 illustrates a relationship among the optical axis of a lens 21, a subject AA', and a real image BB'. The lens 21 conceptually indicates, for example, one or a plurality of lenses of the camera 502.

The light (line segment A'O' in the drawing) incident on the lens 21 parallel to the optical axis passes through a focal point C of the lens 21. On the other hand, the light (line segment A'O in the drawing) passing through the center O of the lens 21 travels straight as it is. A real image is formed at a point B' where the two intersect.

The distance between the lens 21 and the subject is denoted by "s", the focal distance of the lens 21 is denoted by "f", and the distance between the lens 21 and the real image is denoted by "i".

Since ΔAOA' and ΔBOB' are similar, the following (Math. 1) holds. Note that "Δ" represents a triangle, and for example, "ΔAOA'" is a triangle having points A, O, and A' in the drawing as vertices.
[Math. 1] $\frac{BB ′}{AA ′} = \frac{BO}{AO} = \frac{i}{s}$

Furthermore, since ΔOCO' and ΔBCB' are similar to each other, (Math. 2) holds.
[Math. 2] $\frac{BB ′}{OO ′} = \frac{CB}{CO} = \frac{i - f}{f}$

Then, since the line segment AO and the line A'O' are parallel to each other,
AA' = OO'
when i is deleted from the above, the following is obtained.
[Math. 3] $\frac{BB ′}{AA ′} = \frac{f}{s - f}$

Therefore, the magnification of the image formed on the image sensor of the camera 502 can be calculated by the above (Math. 3) from the distance s from the lens 21 to the subject and the focal distance f of the lens 21.

Furthermore, (Math. 4), which is a lens formula, is derived from a relational expression of similarity of (Math. 1) and (Math. 2).
[Math. 4] $\frac{1}{s} + \frac{1}{i} = \frac{1}{f}$

Note that, in the case of s < f, the real image is not formed. Since i → ∞ is satisfied in s → f, s > f is satisfied due to a physical constraint.

Next, image blurring will be described.

In general, in a camera using a solid-state imaging element, an optical LPF is inserted between a lens and an image sensor to suppress folding distortion due to sampling in pixels of the image sensor.

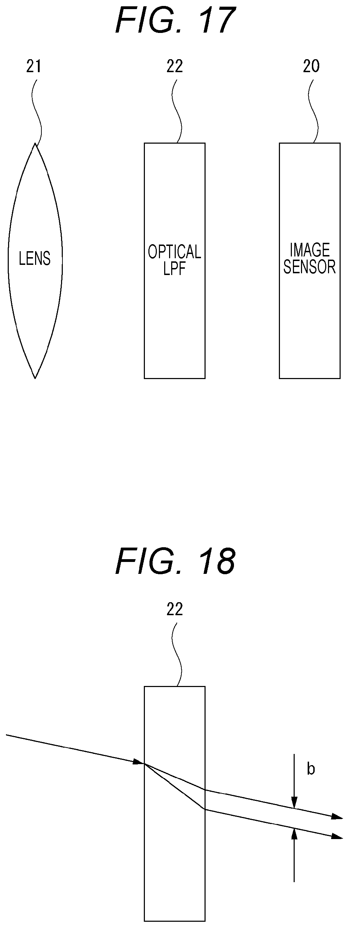

Fig. 17 illustrates a state in which an optical LPF 22 is arranged between a lens 21 and an image sensor 20.

The optical LPF 22 uses a substance having a refractive index different depending on polarized light, such as calcite or crystal, to blur an image by double birefringence.

Fig. 18 illustrates birefringence by the optical LPF 22. The width indicated by "b" is the amount by which the image is shifted (blur amount) due to the characteristics of the optical LPF 22, and is described as "shift amount b" for the sake of description.

Assuming that the image of the subject is a double image with the shift amount b as illustrated in Fig. 18, the frequency characteristics are as follows by performing Fourier transform.
[Math. 5] $\frac{1 + {e}^{- j ω b}}{2}$

Since the amplitude characteristic is √{(real part)^2+ (imaginary part)^2}, the following is obtained. Note that "^" represents a power, and "^2" means a square.

w is an angular frequency and 2π × spatial frequency.
[Math. 6] $\left|cosω\frac{b}{2}\right|$

In general, the shift amount b is set to 1/2 of the width of the pixel in order to add a zero point to the sampling frequency of the pixel, but some cameras narrow or widen the bandwidth. Furthermore, the optical LPF 22 may be overlapped to give a zero point to two frequencies. For example, the amplitude characteristic in a case where two optical LPFs 22 of the shift amount b and the shift amount b' overlap each other is in the form of a product and is as follows.
[Math. 7] $\left|cosω\frac{b}{2}⋅cosω\frac{b ′}{2}\right|$

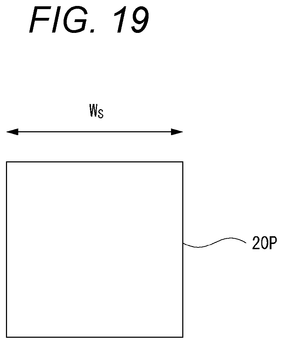

The photodiode of the image sensor 20 condenses light with an on-chip lens in order to gain sensitivity. Assuming that all the light incident on a pixel 20P having a width Ws as illustrated in Fig. 19 is collected in the photodiode while being ignored in the wiring or the like, the frequency characteristics are as follows by Fourier transform.
[Math. 8] $\left|\frac{1}{{W}_{s}}{\int }_{- \frac{{W}_{s}}{2}}^{\frac{{W}_{s}}{2}} {e}^{- j ω x} dx\right| = \left|\frac{sin ω \frac{{W}_{s}}{2}}{ω \frac{{W}_{s}}{2}}\right|$

Here, it is assumed that the image is blurred, and the light passing through the lens 21 spreads in a circular shape having a diameter δ without converging at one point.

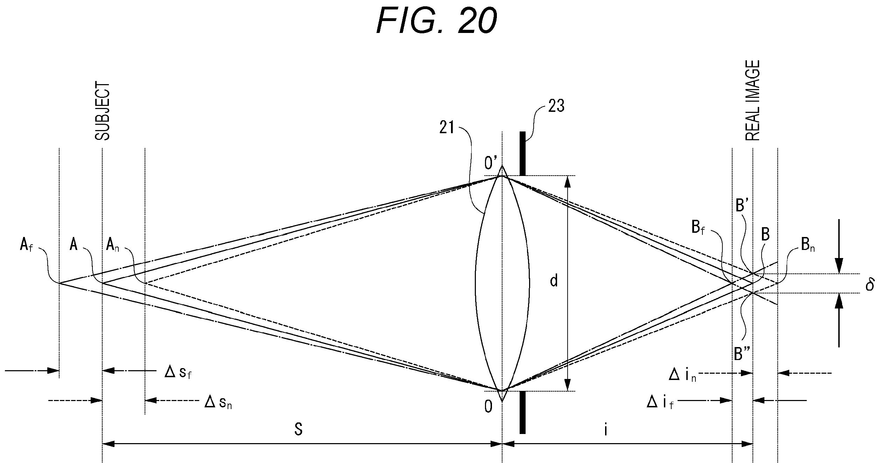

Fig. 20 illustrates how an image is blurred together with a lens 21 and a diaphragm 23.

It is assumed that the subject is located at a position A and the real image can be located at a position B (solid line).

Furthermore, as illustrated in the drawing, the distance from the lens 21 to the subject is "s", the distance from the lens 21 to the real image is "i", the focal distance of the lens 21 is "f", and the aperture of the lens 21 narrowed by the diaphragm 23 is "d" (length of OO').

As indicated by the one-dot chain line, when the focal point is on a position Af behind the subject by a distance Δsf, the real image can be located at a position Bf ahead of the position B by a distance Δif, and is blurred to the diameter δ at the position B.

Furthermore, as indicated by a broken line, when a focal point is put on a position An ahead of the subject by a distance Δsn, the real image can be located at a position Bn behind the position B by a distance Δin, and is blurred to the diameter δ at the position B.

The relational expression between the distance to the subject, the distance to the real image, and the focal distance in each case indicated by the solid line, the one-dot chain line, and the broken line is as follows based on the above (Math. 4).
[Math. 9] $\begin{matrix}\frac{1}{s} + \frac{1}{i} = \frac{1}{f} \\ \frac{1}{s + Δ {s}_{f}} + \frac{1}{i - Δ {i}_{f}} = \frac{1}{f} \\ \frac{1}{s - Δ {s}_{n}} + \frac{1}{i + Δ {i}_{n}} = \frac{1}{f}\end{matrix}$

Then, since ΔOBfO' and ΔB'BfB" are similar to each other, the following is obtained.
[Math. 10] $\frac{δ}{d} = \frac{B ′ B "}{OO ′} = \frac{Δ {i}_{f}}{i - Δ {i}_{f}}$

Furthermore, since ΔOBnO' and ΔB'BnB" are similar to each other, the following is obtained.
[Math. 11] $\frac{δ}{d} = \frac{B ′ B "}{OO ′} = \frac{Δ {i}_{n}}{i + Δ {i}_{n}}$

When the F value of the lens 21 is "F", the following is obtained from the definition.
[Math. 12] $F = \frac{f}{d}$

Therefore, when i, Δif, Δin, and d are deleted from the above, the diameter δ is expressed as follows.
[Math. 13] $δ = \frac{{f}^{2} Δ {s}_{f}}{F \left(s-f\right) \left(s+Δ{s}_{f}\right)} = \frac{{f}^{2} Δ {s}_{n}}{F \left(s-f\right) \left(s-Δ{s}_{n}\right)}$

A focusing distance l of the lens 21 is rewritten as follows. Note that the focusing distance is a distance between a lens and a subject when a focal point is on the subject, although it is also referred to as an imaging distance. Hereinafter, the focusing distances are unified.
[Math. 14] $δ = \frac{{f}^{2} \left|s-l\right|}{F \left(s-f\right) l}$

The diameter δ of the blur when the focal point of the lens 21 is shifted with respect to the actual distance s to the subject and the focusing distance is set to "l" can be calculated from the focal distance f of the lens 21 and the F value F of the lens 21 in addition to the distance s and the focusing distance l as described above (Math. 14). As described in the description of (Math. 4), s > f, l > f, and the F value F does not become 0. Therefore, if f > 0, the denominator of (Math. 14) does not become 0.

The frequency characteristics at the time of circular blurring of the diameter δ can be calculated as follows by Fourier transform.
[Math. 15] $\frac{8}{{πδ}^{2}} {\int }_{- \frac{δ}{2}}^{\frac{δ}{2}} \sqrt{\frac{{δ}^{2}}{4} - {x}^{2}} {e}^{- j ω x} dx$

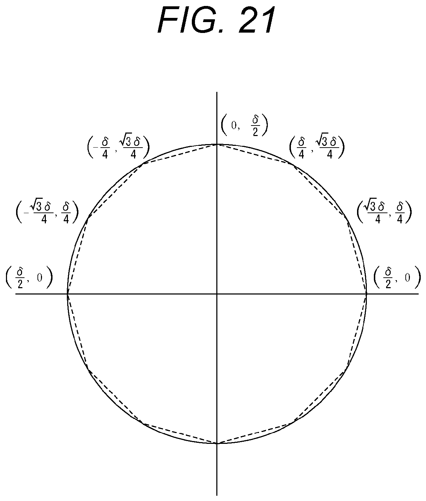

However, since it is difficult to solve this integration, if approximation is performed with a regular dodecagonal shape as indicated by a broken line in Fig. 21, calculation can be performed by a partial integration formula as follows.
[Math. 16] $\begin{matrix}\frac{8}{3 {δ}^{2}} \left|\begin{matrix}{\int }_{- \frac{δ}{2}}^{- \frac{\sqrt{3} δ}{4}} \left(2+\sqrt{3}\right) \left(x+\frac{δ}{2}\right) {e}^{- j ω x} dx + {\int }_{- \frac{\sqrt{3} δ}{4}}^{- \frac{δ}{4}} \left(x+\frac{1 + \sqrt{3}}{4}δ\right) {e}^{- j ω x} dx \\ + {\int }_{- \frac{δ}{4}}^{0} \left\{\left(2-\sqrt{3}\right)x+\frac{δ}{2}\right\} {e}^{- j ω x} dx + {\int }_{0}^{\frac{δ}{4}} \left\{\left(\sqrt{3}-2\right)x+\frac{δ}{2}\right\} {e}^{- j ω x} dx \\ + {\int }_{\frac{δ}{4}}^{\frac{\sqrt{3} δ}{4}} \left(-x+\frac{1 + \sqrt{3}}{4}δ\right) {e}^{- j ω x} dx + {\int }_{\frac{\sqrt{3} δ}{4}}^{\frac{δ}{2}} - \left(2+\sqrt{3}\right) \left(x-\frac{δ}{2}\right) {e}^{- j ω x} dx\end{matrix}\right| \\ = \left|\frac{4 + 2 \sqrt{3}}{3}⋅\frac{{sin}^{2} ω \frac{δ}{4}}{{\left(ω\frac{δ}{4}\right)}^{2}}-\frac{1 + \sqrt{3}}{2}⋅\frac{{sin}^{2} ω \frac{\sqrt{3} δ}{8}}{{\left(ω\frac{\sqrt{3} δ}{8}\right)}^{2}}+\frac{1 - \sqrt{3}}{6}⋅\frac{{sin}^{2} ω \frac{δ}{8}}{{\left(ω\frac{δ}{8}\right)}^{2}}\right|\end{matrix}$

Here, it is calculated that the inside of the circle having the diameter δ is blurred with uniform brightness, but actually, the light flux may be vignetted inside the lens and may not be rounded. However, since many expensive lenses that take works of art are cleanly rounded, this calculation expression is applied.

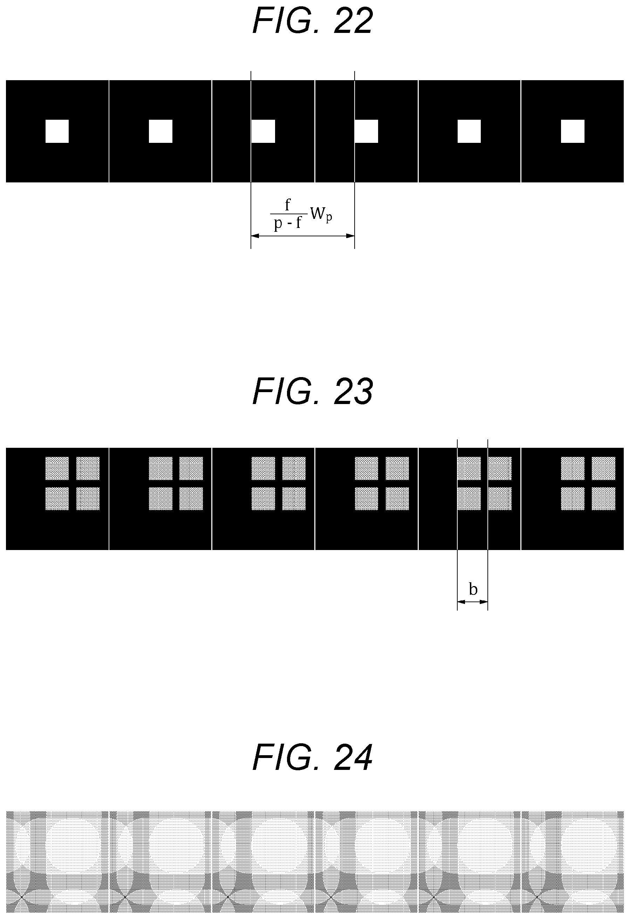

The LED panel 506 earns the contrast ratio by narrowing the area of the LED as much as possible to widen the area of the black base. Therefore, when the LED panel 506 is imaged, it appears as illustrated in Fig. 22. The drawing illustrates a portion where six LEDs are arranged as an image of the LEDs on the image sensor 20 when the LED panel 506 is imaged by the camera 502. It is assumed that a white square in the drawing is an image of an LED.

Now, assuming that the actual LED interval of the LED panel 506 is "Wp", the distance between the camera 502 and the LED panel 506 is "p", and the focal distance of the lens 21 is "f", the interval of the LED image formed on the image sensor 20 of the camera 502 is expressed as the following (Math. 17) based on (Math. 3) described above.
[Math. 17] $\frac{f}{p - f} {W}_{p}$

The images at such intervals become double images separated by the shift amount b by the optical LPF 22. However, since the actual pixels are arranged two-dimensionally, the pixels are actually divided vertically and horizontally to form quadruple images of upper, lower, left, and right as illustrated in Fig. 23.

When this is blurred by the diameter δ, the rectangular LED image becomes a bale shape. Then, unevenness in brightness occurs as illustrated in Fig. 24 due to some overlapping of the blurred images of the LED, which causes artifacts such as moire.

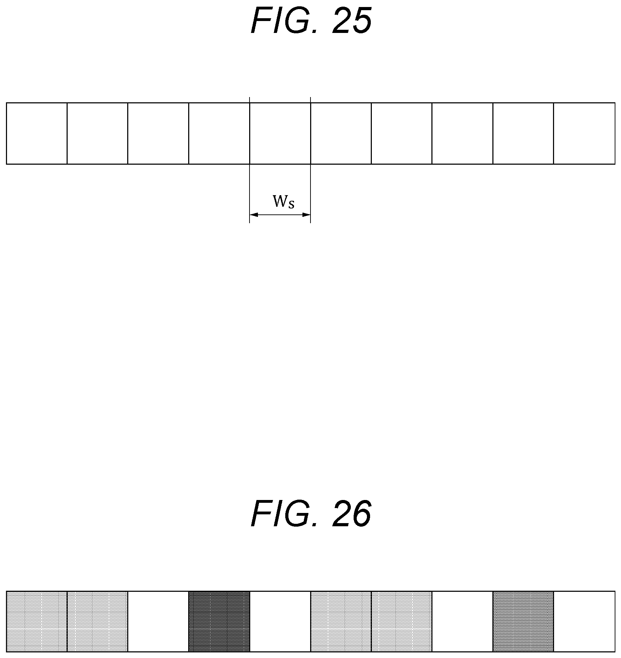

This is imaged by the image sensor 20 at the pixel interval Ws as illustrated in Fig. 25. The integrated value of the light that has entered the range of the pixel is the output of the pixel.

The result is the difference in brightness felt by each pixel as illustrated in Fig. 26. Since slight brightness changes depending on the positional relationship between the LED image and the pixel of the image sensor, a low-frequency moire longer than the interval between the LED images is observed.

How much the image of the LED is suppressed by the optical LPF 22, the integration effect in the pixel, and the blur in the lens 21 will be considered.

Since the repetition frequency of the image of the LED is the reciprocal of the interval between the images of the LED, the angular frequency ω can be calculated by the following expression.
[Math. 18] $ω = \frac{2 π \left(p-f\right)}{f {W}_{p}}$

Considering the interval (shift amount b) of the double images by the optical LPF 22, an amplitude Af of the optical LPF 22 can be calculated by the following (Math. 19) from (Math. 6) described above.
[Math. 19] ${A}_{f} = \left|cos\left(ω\frac{b}{2}\right)\right|$

By the interval Ws between the pixels of the image sensor 20, an amplitude Ap due to the integration effect in the pixels can be calculated by (Math. 20) following (Math. 8) described above.
[Math. 20] ${A}_{p} = \left|\frac{sin \left(ω\frac{{W}_{s}}{2}\right)}{\left(ω\frac{{W}_{s}}{2}\right)}\right|$

An amplitude Ab due to the blur of the lens 21 can be approximately calculated by the following equation from (Math. 14) (Math. 15) described above by the F value F of the lens 21 and the focusing distance l of the lens 21.
[Math. 21] $\begin{matrix}{A}_{b} = \left|\frac{4 + 2 \sqrt{3}}{3}⋅\frac{{sin}^{2} \left(ω\frac{δ}{4}\right)}{{\left(ω\frac{δ}{4}\right)}^{2}}-\frac{1 + \sqrt{3}}{2}⋅\frac{{sin}^{2} \left(ω\frac{\sqrt{3} δ}{8}\right)}{{\left(ω\frac{\sqrt{3} δ}{8}\right)}^{2}}+\frac{1 - \sqrt{3}}{6}⋅\frac{{sin}^{2} \left(ω\frac{δ}{8}\right)}{{\left(ω\frac{δ}{8}\right)}^{2}}\right| \\ δ = \frac{{f}^{2} \left|p-l\right|}{F \left(p-f\right) l}\end{matrix}$

The pixel interval Ws and the shift amount b are constants determined by the model of the camera 502, and the LED interval Wp of the LED panel 506 is a constant determined by the model of the LED panel 506. Therefore, the amplitude Af of the optical LPF 22 and the amplitude Ap due to the integration effect in the pixel vary depending on the distance p between the camera 502 and the LED panel 506 and the focal distance f of the lens 21.

The amplitude Ab due to the blur of the lens 21 becomes a function of ωδ (ω: angular frequency, δ: diameter of blur). From (Math. 18) and (Math. 21) described above, ωδ can be calculated by the following expression.
[Math. 22] $ωδ = \frac{2 π \left(p-f\right)}{f {W}_{p}} ⋅ \frac{{f}^{2} \left|p-l\right|}{F \left(p-f\right) l} = \frac{2 π f \left|p-l\right|}{{W}_{p} Fl}$

Therefore, in addition to the distance p and the focal distance f between the camera 502 and the LED panel 506, the amplitude Ab also varies depending on the F value F of the lens 21 and the focusing distance l of the lens 21.

The amplitude A of the image of the LED can be calculated as follows.
[Math. 23] $A = {A}_{f} ⋅ {A}_{p} ⋅ {A}_{b}$

If the amplitude A is sufficiently attenuated and becomes smaller than a certain threshold, it can be determined that no artifact such as moire occurs.

The amplitude Ab due to the blur can be expressed as a function of (ωδ) as follows from (Math. 21) and (Math. 22) described above.
[Math. 24] $\begin{matrix}{A}_{b} = \left|\frac{4 + 2 \sqrt{3}}{3}⋅\frac{{sin}^{2} \left(\frac{ωδ}{4}\right)}{{\left(\frac{ωδ}{4}\right)}^{2}}-\frac{1 + \sqrt{3}}{2}⋅\frac{{sin}^{2} \left(\frac{\sqrt{3} ωδ}{8}\right)}{{\left(\frac{\sqrt{3} ωδ}{8}\right)}^{2}}+\frac{1 - \sqrt{3}}{6}⋅\frac{{sin}^{2} \left(\frac{ωδ}{8}\right)}{{\left(\frac{ωδ}{8}\right)}^{2}}\right| \\ ωδ = \frac{2 π f \left|p-l\right|}{{W}_{p} Fl}\end{matrix}$

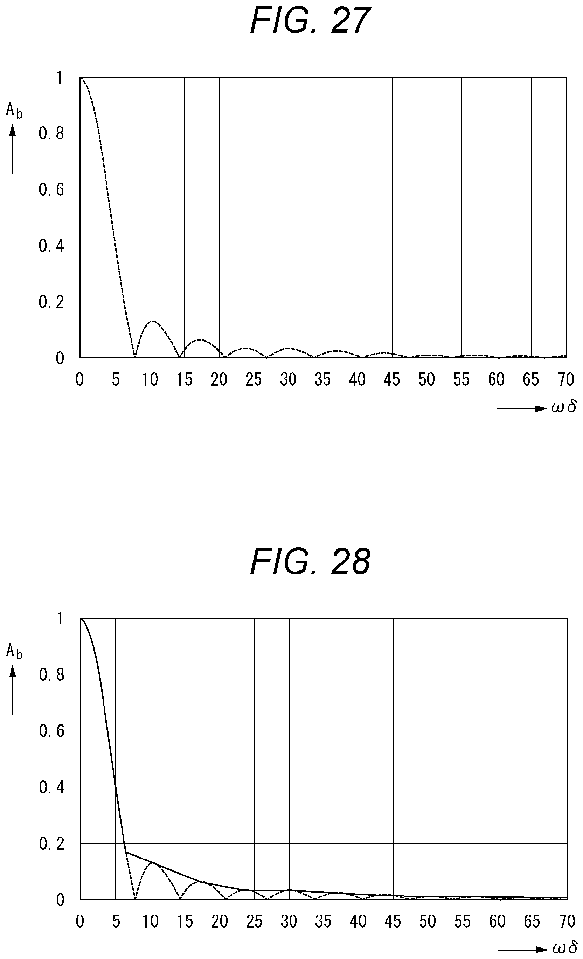

When a graph in which ωδ is plotted on the horizontal axis and the amplitude Ab is plotted on the vertical axis, the graph does not monotonously decrease as in Fig. 27, and there are many local maximum values and local minimum values.

When an artifact such as moire is to be eliminated by shifting the focal point of the lens 21 at the imaging site, for example, if the amplitude Ab decreases or increases (local minimum value and local maximum value are repeated) as the focus ring is turned and the focusing distance l of the lens 21 changes, it becomes a source of confusion. Furthermore, the calculation expression of the amplitude Ab is an approximate expression as described above, and is not a strict calculation.

Therefore, replacement with a function in which the amplitude Ab monotonously attenuates according to ωδ is easier to use on site.

When the amplitude is estimated to be large, there is more room for use as a warning about the occurrence of artifacts such as moire. Therefore, it is considered to approximate the amplitude in the form of an envelope tracing the local maximum value as indicated by a solid line in Fig. 28.

Specifically, it is obtained by an approximate expression of each range from a case of ωδ < 6.487887 to a case of 86.34829 ≤ ωδ as follows. Note that each range from 6.487887 ≤ ωδ < 17.240423 to 63.501086 ≤ ωδ < 86.34829 is approximated by a linear expression.
[Math. 25] ${A}_{b} = \left\{\begin{matrix}\left|\frac{4 + 2 \sqrt{3}}{3}⋅\frac{{sin}^{2} \left(\frac{ωδ}{4}\right)}{{\left(\frac{ωδ}{4}\right)}^{2}}-\frac{1 + \sqrt{3}}{2}⋅\frac{{sin}^{2} \left(\frac{\sqrt{3} ωδ}{8}\right)}{{\left(\frac{\sqrt{3} ωδ}{8}\right)}^{2}}+\frac{1 - \sqrt{3}}{6}⋅\frac{{sin}^{2} \left(\frac{ωδ}{8}\right)}{{\left(\frac{ωδ}{8}\right)}^{2}}\right| \\ \begin{matrix} \\ - 0.01001528 ωδ + 0.237345 \\ - 0.004609158 ωδ + 0.144141 \\ - 0.00004981445 ωδ + 0.036216 \\ - 0.00134131 ωδ + 0.075136 \\ - 0.001036152 ωδ + 0.063855 \\ - 0.001088771 ωδ + 0.066157 \\ - 0.0001578238 ωδ + 0.019329 \\ - 0.0003762541 ωδ + 0.031731 \\ - 0.0003430757 ωδ + 0.029624 \\ 0\end{matrix} \begin{matrix}⋯ ωδ < 6.487887 \\ ⋯ 6.487887 \leq ωδ < 17.240423 \\ ⋯ 17.240423 \leq ωδ < 23.671164 \\ ⋯ 23.671164 \leq ωδ < 30.135152 \\ ⋯ 30.135152 \leq ωδ < 36.965786 \\ ⋯ 36.965786 \leq ωδ < 43.73815 \\ ⋯ 43.73815 \leq ωδ < 50.30133 \\ ⋯ 50.30133 \leq ωδ < 56.776906 \\ ⋯ 56.776906 \leq ωδ < 63.501086 \\ ⋯ 63.501086 \leq ωδ < 86.34829 \\ ⋯ 86.34829 \leq ωδ\end{matrix}\end{matrix}\right.$

Note that, from experience, moire or the like is almost not visible if it is suppressed to 0.5% or less, and thus it is considered that approximation to this degree may be performed.

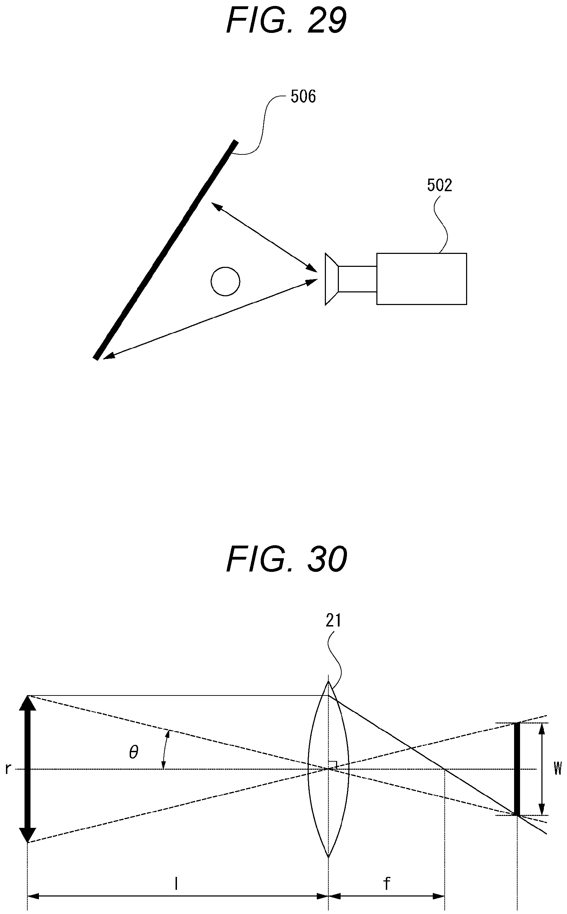

By the way, considering a relative positional relationship between the camera 502 and the LED panel 506, it is rare that the panel surface and the image sensor surface face each other in parallel, and actually, as illustrated in Fig. 29, the camera 502 often photographs the LED panel 506 from an oblique direction. In such a case, the distance p between the camera 502 and the LED panel 506 varies depending on the location in the panel.

Normally, since a subject (performer 510 or the like) on the front side of the LED panel 506 is focused, the focusing distance l of the lens 21 is shorter than the distance p. Therefore, it is expected that the amplitude Ab due to the blur is maximized at the shortest distance p in the range appearing in the camera 502.

However, in a case where a wide-angle lens is used at a shallow angle, l > p may be considered, and the amplitude Af and the amplitude Ap do not monotonously decrease with respect to an increase in the distance p. Therefore, the amplitude A of the image of the LED is not necessarily maximized at the shortest distance p.

Therefore, in a case where the camera 502 is photographing the LED panel 506 from an oblique direction as illustrated in Fig. 29, the amplitude A of the LED image is calculated by finely engraving a distance between the shortest distance p of the range appearing in the camera 502 and the longest distance p of the range appearing in the camera 502, and the calculated amplitude A is used to determine whether or not an artifact such as moire appears.

Even if the LED panel 506 is not a flat surface but a curved surface, similarly, the amplitude A of the LED image is calculated by finely engraving the shortest distance p of the range appearing in the camera 502 and the longest distance p of the range appearing in the camera 502, and the maximum value is used to determine whether or not an artifact such as moire appears.

Fig. 30 illustrates an image via the lens 21 as in Fig. 16. A range r appearing in the camera on the subject side is expressed by the following (Math. 26) using the above-described (Math. 3) according to the focusing distance l of the lens 21, the focal distance f of the lens 21, and the width w of the imaging surface of the image sensor 20.
[Math. 26] $r = \frac{l - f}{f} w$

Therefore, the angle θ in Fig. 30 can be calculated by the following expression.

Then, the range appearing in the camera 502 is a range of an angle of ±θ from the optical axis of the lens 21.
[Math. 27] $θ = {tan}^{- 1} \frac{r}{2 l} = {tan}^{- 1} \frac{\left(l-f\right) w}{2 fl}$

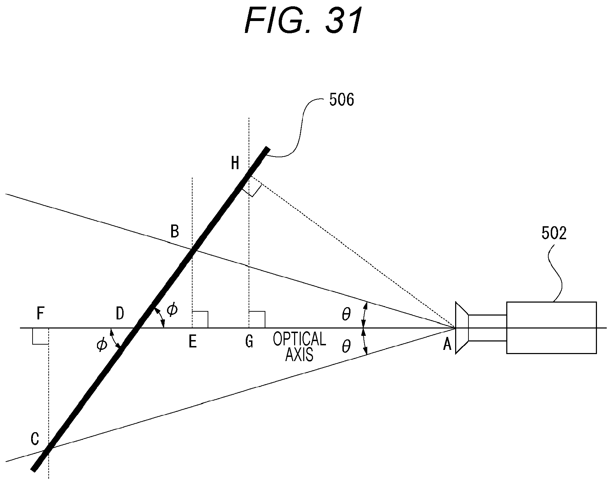

As illustrated in Fig. 31, in a case where the range appearing in the camera 502 is inclined at an angle of ±θ with respect to the optical axis and the LED panel 506 is inclined at an angle of Φ (≤ 90°) with respect to the optical axis, the relational expression between a distance AD between the camera 502 and the LED panel 506 along the optical axis and the lengths of the distances AB and AC at the ends of the range appearing in the camera 502 is as follows.
[Math. 28] $\begin{matrix}AD = AE + ED = AB cos θ + AB sin θ ⋅ cot ϕ \\ AB = AD \frac{sin ϕ}{sin \left(ϕ+θ\right)} \\ AD = AF - DF = AC cos θ + AC sin θ ⋅ cotΦ \\ AC = AD \frac{sin ϕ}{sin \left(ϕ-θ\right)}\end{matrix}$

When a foot of a perpendicular line drawn from the camera 502 to the LED panel 506 is "H", the shortest distance between the camera 502 and the LED panel 506 is AH.
[Math. 29] $AH = AD sin ϕ$

In the case of Φ ≥ 90° - θ, since the foot H of the perpendicular line falls within the range appearing in the camera 502, the shortest distance between the camera 502 and the LED panel is the distance AH.

Since the distance on the optical axis is used in the calculation of the diameter δ of the blur as illustrated in Figs. 16 and 20, a distance AG from the foot H of the perpendicular line to a foot G of the perpendicular line to the optical axis is used. The distance AG is as follows.
[Math. 30] $AG = AH sin ϕ = AD {sin}^{2} ϕ$

In the case of Φ < 90° - θ, the foot H of the perpendicular line is out of the range appearing in the camera 502, so that the shortest distance between the camera 502 and the LED panel 506 is the distance AB. Since the distance on the optical axis is used in the calculation of the diameter δ of the blur, the distance is the distance AE from the point B to the foot E of the perpendicular line drawn on the optical axis.
[Math. 31] $AE = AB cos θ = AD \frac{sin ϕ cos θ}{sin \left(ϕ+θ\right)}$

Then, the longest distance between the camera 502 and the LED panel 506 is the distance AC. Since the distance on the optical axis is used in the calculation of the diameter δ of the blur, the distance is the distance AF from the point C to the foot F of the perpendicular line drawn on the optical axis. [Math. 32] $AF = AC cos θ = AD \frac{sin ϕ cos θ}{sin \left(ϕ-θ\right)}$

The distance on the image sensor 20 can be measured from the image if the dimensions of the pixels are known.

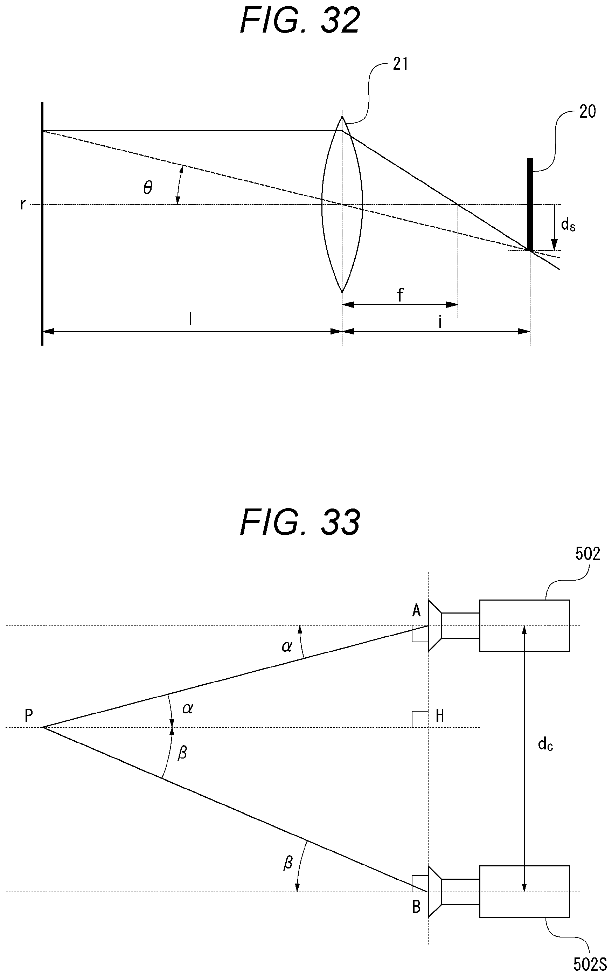

As illustrated in Fig. 32, an angle θ formed by a line (broken line in the drawing) obtained by viewing a point appearing at a position of a distance ds from the optical axis on the image sensor 20 from the lens 21 and the optical axis is as follows (Math. 33) using the above-described (Math. 3) from the focusing distance l and the focal distance f of the lens 21.
[Math. 33] $θ = {tan}^{- 1} \frac{{d}_{s}}{i} = {tan}^{- 1} \frac{\left(l-f\right) {d}_{s}}{lf}$

Here, it is assumed that an auxiliary camera 502S for distance measurement is provided in addition to the camera 502 for imaging. The auxiliary camera 502S may be an additional imaging optical system fixed to or built in the camera 502, or may be a separate camera.

As illustrated in Fig. 33, when the same point P is imaged by the camera 502 and the auxiliary camera 502S whose optical axes are parallel to each other and separated by the distance dc, it is assumed that the angles formed by the lines AP and BP connecting the cameras (502, 502S) and the point P and the optical axes of the cameras are α and β.

A distance PH from the point P to the foot H of a perpendicular line drawn on a line AB connecting the two cameras (502, 502S) can be calculated as follows.
[Math. 34] $\begin{matrix}{d}_{c} = AH + BH = PH tan α + PH tan β \\ PH = \frac{{d}_{c}}{tan α + tan β} = \frac{cos α cos β}{sin \left(α+β\right)} {d}_{c}\end{matrix}$

The distance AP between the camera 502 and the point P and the distance BP between the auxiliary camera 502S and the point P can be calculated as follows.
[Math. 35] $\begin{matrix}AP = \frac{PH}{cos α} = \frac{cos β}{sin \left(α+β\right)} {d}_{c} \\ BP = \frac{PH}{cos β} = \frac{cos α}{sin \left(α+β\right)} {d}_{c}\end{matrix}$

In this manner, the distance to an arbitrary point can be measured from the captured image using the two cameras.

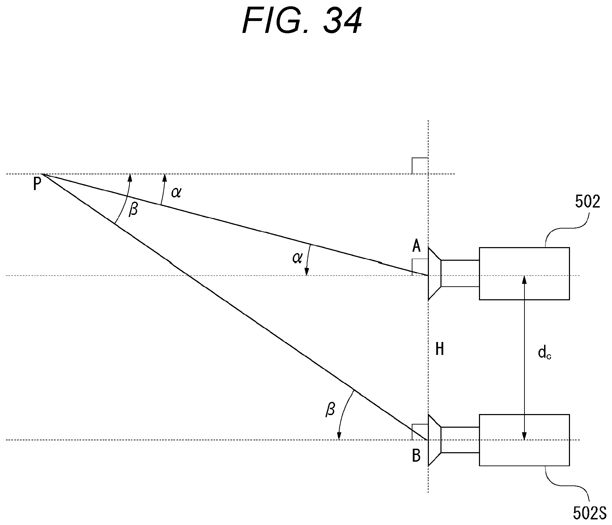

In a case where the point P is located outside the optical axis of the camera 502 as illustrated in Fig. 34, the angle is in a direction opposite to that in Fig. 33, and thus, it may be calculated as a negative value.

Note that, although an example of distance measurement using two cameras has been described above, it is also possible to perform measurement using a distance measurement sensor. Furthermore, it is also possible to obtain a distance value from the information of the camera tracker 560.

Moreover, in a case where the position of the camera 502 is fixed, it is possible to actually measure a distance with a winding or the like at the imaging site and perform input.

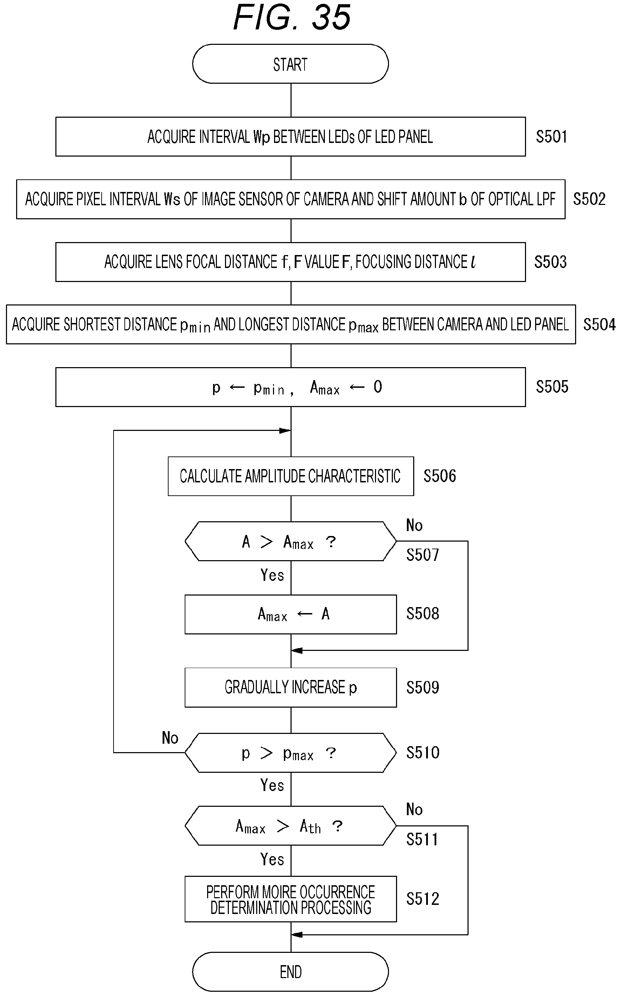

The concept of the determination processing of occurrence of moire and the like has been described above. Fig. 35 illustrates a flow of determination processing executed by the information processing device 70 according to the above concept.

The information processing device 70 here is, for example, an information processing device having a function as the determination unit 36 or the determination unit 520d in Fig. 10. Specifically, in the example of Fig. 10, the information processing device 70 serving as the rendering engine 31 and the information processing device 70 serving as the rendering engine 520 are used. Another information processing device may be used.

Then, the processing of Fig. 35 is a processing example executed by the CPU 71 of the information processing device 70 according to a program for determining moire or the like.

In step S501, the CPU 71 acquires the LED interval Wp of the LED panel 506. The LED interval Wp has a fixed value depending on the model. The CPU 71 can obtain information on the model of the LED panel 506 by communication with other devices, operator input, or the like, and can acquire the LED interval Wp with reference to the DB according to the model. Therefore, for example, a DB for storing the LED interval Wp according to the model of the LED panel 506 is provided in the nonvolatile memory unit 74, the storage unit 79, and the like.

Alternatively, it is also conceivable that the CPU 71 directly acquires the value of the interval Wp by input of an operator or the like or communication between devices.

In step S502, the CPU 71 acquires the pixel interval Ws of the image sensor 20 of the camera 502 and the shift amount b of the optical LPF.

These values are fixed depending on the model of the camera 502. The CPU 71 can obtain information on the model of the camera 502 by communication with another device, operator input, or the like, and can acquire the pixel interval Ws and the shift amount b with reference to the DB according to the model. Therefore, for example, a DB for storing the LED interval Wp according to the model of the camera 502 is provided in the nonvolatile memory unit 74, the storage unit 79, or the like.

Alternatively, it is also conceivable that the CPU 71 directly acquires the values of the pixel interval Ws and the shift amount b by input of an operator or the like or communication between devices.

In step S503, the CPU 71 acquires the focal distance f, the F value F, and the focusing distance l of the lens 21 of the camera 502.

For example, the CPU 71 may be able to acquire these values by communication with the camera 502 (lens barrel), or may be able to acquire these values by operator input regarding a numerical value or the like displayed on the lens barrel.

In step S504, the CPU 71 acquires the distance p between the camera 502 and the LED panel 506. For example, the above-described shortest distance pmin and longest distance pmax are acquired.

A procedure for measuring the distance along the optical axis of the camera 502 using the auxiliary camera 502S installed such that the optical axis is parallel to the camera 502 and separated from the camera by the distance dc as illustrated in Fig. 33 will be described as (i) to (v) below.

In Fig. 33, when α = 0, the length of the line segment AP is a distance along the optical axis of the camera 502.
(i) The pixel values of several pixels near the optical axis center are acquired from the camera 502.
(ii) Pixel values of all pixels of the auxiliary camera 502S are acquired.

It is assumed that a focal distance of the lens 21 of the camera 502 is "fmain", a focusing distance is "lmain", and a pixel dimension of the image sensor 20 is "Wsmain".

It is assumed that a focal distance of lens 21 of the auxiliary camera 502S is "fsub", a focusing distance is "lsub", and a pixel dimension of image sensor 20 is "Wssub".

The image of the camera 502 becomes fmain/(lmain - fmain) times the actual dimension from (Math. 3) described above, and is sampled at an interval of the pixel dimension Wsmain.

The image of the auxiliary camera 502S becomes fsub/(lsub - fsub) times the actual dimension from (Math. 3), and is sampled at an interval of the pixel dimension Wssub.

Therefore, the image acquired from auxiliary camera 502S needs to be enlarged or reduced at the next magnification.
[Math. 36] $\frac{{f}_{sub} \left({l}_{main}-{f}_{main}\right) {W}_{smain}}{{f}_{main} \left({l}_{sub}-{f}_{sub}\right) {W}_{ssub}}$

Conversely, the partial image acquired in the above (i) may be enlarged or reduced according to the auxiliary camera 502S. In this case, the reciprocal of the above magnification is used, and the focal distance, the focusing distance, and the pixel dimensions used for the following (iii) and subsequent calculations are those of the auxiliary camera 502S.

(iii) A cross-correlation function with the pixel value in the vicinity of the optical axis center acquired from the camera 502 is calculated from the upper left to the lower right of the screen with respect to the pixel value of the auxiliary camera 502S, and the maximum coordinates are searched for.

(iv) The distance between the pixel position of the optical axis center of the auxiliary camera 502S and the coordinates at which the cross-correlation function is maximized is obtained, and the distance ds is obtained by multiplying the pixel dimension Wsmain of the image sensor 20.

(v) Substitution is performed as follows for α and β in (Math. 34) and (Math. 35) described above.
[Math. 37] $α = 0 , β = {tan}^{- 1} \frac{\left({l}_{main}-{f}_{main}\right) {d}_{s}}{{l}_{main} {f}_{main}}$

The above α and β are substituted into the calculation expression of the line segment AP of (Math. 35), and the distance pa to the LED panel 506 along the optical axis of the camera 502 is obtained by the following calculation formula.
[Math. 38] ${p}_{a} = \frac{{l}_{main} {f}_{main} {d}_{c}}{\left({l}_{main}-{f}_{main}\right) {d}_{s}}$

Similarly, a distance pb from the optical axis of the camera 502 to a point on the LED panel 506 visible at an angle θ' as large as possible within a range visible from both the camera 502 and the auxiliary camera 502S is obtained in the procedures (i) to (v).

The distance pb is as follows by the angle Φ formed by the LED panel 506 and the optical axis of the camera 502.
[Math. 39] ${p}_{b} = {p}_{a} \frac{sin ϕ}{sin \left(ϕ+θ′\right)}$

Therefore, the angle Φ can be calculated by the following expression.
[Math. 40] $ϕ = {tan}^{- 1} \frac{{p}_{b} sin θ ′}{\left({p}_{a}-{p}_{b} cos θ′\right)}$

Assuming that the range visible from the camera 502 is a range of an angle of ±θ with respect to the optical axis, the shortest distance pin and the longest distance pmax between the camera 502 and the LED panel 506 can be calculated by the following expression. The angle Φ is 90° or less in Fig. 31, but the maximum value and the minimum value can be calculated by the same formula even when the angle exceeds 90°. However, the angle is calculated as follows in consideration of the possibility of making a mistake in the direction of measuring the angle.
[Math. 41] $\begin{matrix}{p}_{min} = \left\{\begin{matrix}{p}_{a} {sin}^{2} ϕ & \left(ϕ\geq \frac{π}{2}-θ\right) \\ min \left({p}_{a}\frac{sin ϕ cos θ}{sin \left(ϕ+θ\right)}, {p}_{a}\frac{sin ϕ cos θ}{sin \left(ϕ-θ\right)}\right) & \left(ϕ<\frac{π}{2}-θ\right)\end{matrix}\right. \\ {p}_{max} = max \left({p}_{a}\frac{sin ϕ cos θ}{sin \left(ϕ+θ\right)}, {p}_{a}\frac{sin ϕ cos θ}{sin \left(ϕ-θ\right)}\right)\end{matrix}$

For example, in the above processing, in step S504 of Fig. 35, the CPU 71 acquires the shortest distance pmin and the longest distance pmax between the camera 502 and the LED panel 506.

However, the shortest distance pmin and the longest distance pmax may be detected by a distance measurement sensor or may be acquired on the basis of information of the camera tracker 560. Moreover, it may be input by an operator.

In step S505, the CPU 71 substitutes the shortest distance pmin into the distance p as a variable used for calculation. Furthermore, "0" is substituted to the maximum amplitude value Amax.

In steps S506 to S510, the CPU 71 performs processing of calculating the amplitude characteristic while gradually increasing the value of the distance p until the distance p exceeds the longest distance pmax.

First, in step S506, the CPU 71 calculates an amplitude characteristic (amplitude A).

Therefore, the CPU 71 calculates the angular frequency ω according to (Math. 18) described above.

Furthermore, the CPU 71 calculates the amplitude characteristic (amplitude Af) by the optical LPF 22 and the amplitude characteristic (amplitude Ap) by the integration effect in the pixel by the above-described expressions (Math. 19) and (Math. 20).

Furthermore, the CPU 71 calculates the diameter δ of the blur due to the blurring of the focal point by the above-described (Math. 14).

Then, the CPU 71 calculates the amplitude Ab due to the blur according to the value of (ωδ) by the above-described (Math. 25).

The amplitude characteristic (amplitude A) is a product (A = Af·Ap·Ab) of each.

First, since the distance p is the shortest distance pmin, the amplitude A at the shortest distance pmin is obtained.

In step S507, when the calculated amplitude A is larger than the maximum amplitude value Amax at that time, the CPU 71 substitutes the amplitude A calculated this time in step S508 for the maximum amplitude value Amax.

In step S509, the CPU 71 gradually increases the distance p.

In step S510, the CPU 71 determines whether or not the distance p exceeds the longest distance pmax, and returns to step S506 if not. Then, the amplitude A is calculated by the gradually increased distance p.

If the distance p exceeds the longest distance pmax in step S510, the process proceeds from step S510 to step S511.

Therefore, in steps S506 to S510, the amplitude A is obtained for each distance with a certain width in the range from the shortest distance pmin to the longest distance pmax, and the maximum value thereof is set as the maximum amplitude value Amax.

In step S511, the CPU 71 compares the maximum amplitude value Amax with a threshold Ath.

When the maximum amplitude value Amax does not exceed the threshold Ath, the CPU 71 determines that moire or the like does not occur and ends the determination processing.

If the maximum amplitude value Amax exceeds the threshold Ath, the CPU 71 determines that moire or the like occurs, and performs moire occurrence determination processing in step S512.

For example, information such as data and a flag as moire occurrence determination is set. These pieces of information may be stored in a storage medium in association with video data such as the captured video vC and the simulation video vSM, the camera setting information CS, or the like, or may be transmitted to the cloud server 41 or the like, for example. Furthermore, video data as the captured video vC may be added as metadata.

For example, in step S402 of Fig. 14 or step S71 of Fig. 15, the processing of Fig. 35 is performed, and thereafter, moire alert control may be performed in step S404 of Fig. 14 or step S73 of Fig. 15.

Note that it is conceivable that the threshold Ath used in step S511 in Fig. 35 is determined after being adjusted on site. The contrast may be increased or decreased at the time of editing, and also varies depending on the environment in which the finished work is viewed. The threshold Ath may be determined such that the moire or the like becomes an inconspicuous value in the final form.

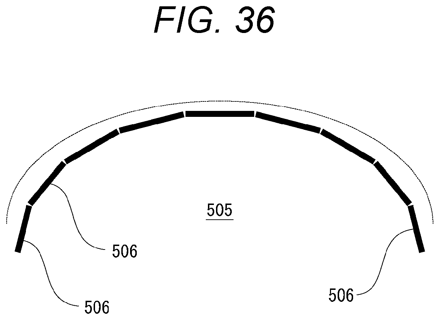

Incidentally, the LED wall 505 may appear to be installed on a curved surface, but such an LED wall 505 is also actually installed by combining small planar LED panels 506 as illustrated in Fig. 36.

Therefore, if the above calculation is performed for each LED panel 506, the occurrence of artifacts such as moire can be predicted.

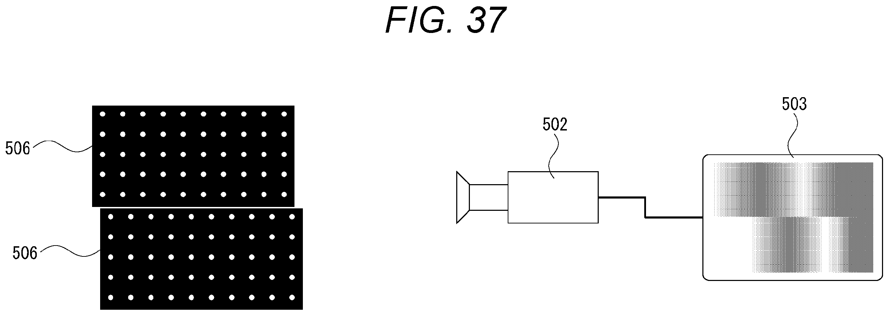

Furthermore, although the moire is only an obstacle for the viewing application, as illustrated in Fig. 37, a slight deviation of the position of the LED in the joint of the LED panel 506 appears to be enlarged by the moire. By utilizing this, it is greatly useful for adjusting the position of the joint of the LED panel 506 when setting up the LED wall 505.

That is, at the time of set-up, as shown in the drawing, the LED wall 505 is imaged by the camera 502 and observed by the output monitor 503, for example. Then, the deviation of the LED panel 506 clearly appears due to the moire. This is because, in a case where the interval between the images of the LEDs formed on the image sensor 20 and the interval between the pixels of the image sensor 20 are slightly different, a minute deviation appears to be enlarged similarly to the relationship between the main scale and the sub scale of the caliper.

In consideration of such use, it is preferable to perform the above-described determination processing in order to search for a condition for generating moire on purpose.

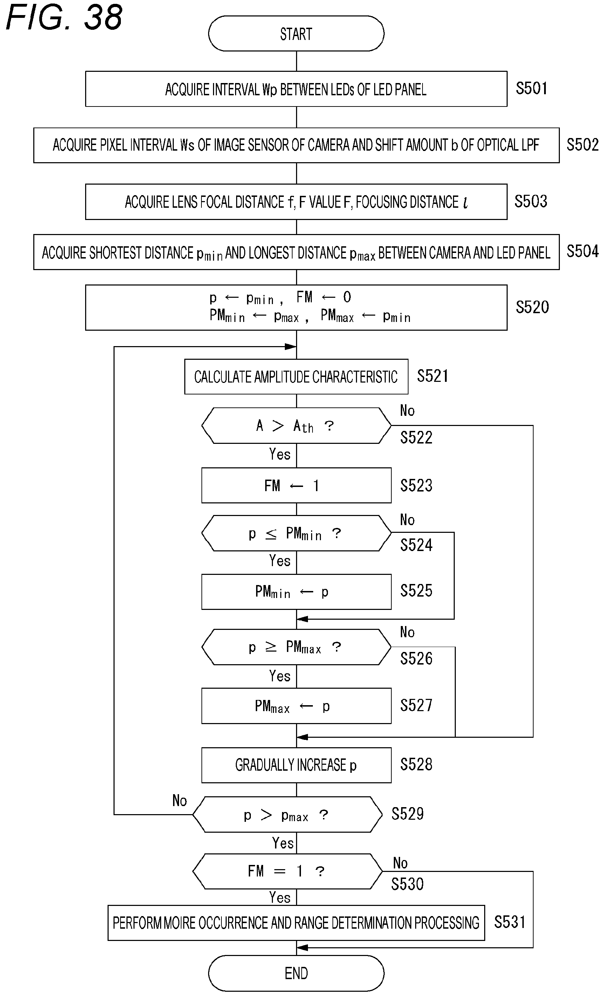

Fig. 38 illustrates another example of the determination processing.

In the processing of Fig. 35 described above, the maximum amplitude value Amax is obtained between the shortest distance pmin and the longest distance pmax, and is compared with the threshold Ath, so that it is simply determined whether or not moire occurs. On the other hand, Fig. 38 is an example of determining in which distance range the moire occurs in the range from the shortest distance pmin to the longest distance pmax. This also determines a range in the plane of the captured video vC where moire or the like occurs.

In FIG. 38, steps S501 to S504 are similar to those in FIG. 35.

In step S520 of Fig. 38, the CPU 71 substitutes the shortest distance pmin into the distance p as a variable for calculation.

Furthermore, the CPU 71 substitutes "0" to a flag FM indicating the occurrence of moire. The flag FM = 0 indicates that moire or the like does not occur, and the flag FM = 1 indicates that moire or the like occurs.

Furthermore, the CPU 71 substitutes the longest distance pmax to a variable PMmin and substitutes the shortest distance pmin to a variable PMmax. The variable PMmin is a variable indicating the shortest distance in the range where the moire occurs, and this initial value is set as the longest distance pmax. Furthermore, the variable PMmax is a variable indicating the longest distance in the range in which the moire occurs, and an initial value thereof is set as the shortest distance pmin.

After setting the initial value as described above, in steps S521 to S529, the CPU 71 performs processing of calculating the amplitude characteristic while gradually increasing the value of the distance p until the distance p exceeds the longest distance pmax.

First, in step S521, the CPU 71 calculates an amplitude characteristic (amplitude A) at the distance p at that time. The calculation of the amplitude A is similar to step S506 in Fig. 35.

In step S522, the CPU 71 compares the calculated amplitude A with the threshold Ath. The threshold Ath is the threshold Ath used in step S511 in Fig. 35, and when the threshold Ath is exceeded, it is determined that moire or the like occurs.

When the amplitude A does not exceed the threshold Ath, the CPU 71 gradually increases the distance p in step S528, further determines whether or not the distance p exceeds the longest distance pmax in step S529, and returns to step S521 when the distance p does not exceed the longest distance pmax.

In a case where the amplitude A exceeds the threshold Ath in step S522, the CPU 71 proceeds to step S523 and sets the flag FM = 1.

In step S524, the CPU 71 determines whether or not the distance p is equal to or less than the variable PMmin.

If p ≤ PMmin, the CPU 71 substitutes the distance p into the variable PMmin in step S525. Since the initial value of the variable PMmin is the longest distance pmax, and the distance p is gradually increased from the shortest distance pmin, the distance p when A > Ath is initially satisfied is substituted into the variable PMmin. Then, the process proceeds to step S526.

If p ≤ PMmin is not satisfied, the CPU 71 passes step S525 and proceeds to step S526.

In step S526, the CPU 71 determines whether or not the distance p is equal to or greater than the variable PMmax.

If p ≥ PMmax, the CPU 71 substitutes the distance p into the variable PMmax in step S527. Since the initial value of the variable PMmax is the shortest distance pmin and the distance p is gradually increased from the shortest distance pmin, the variable PMmax is updated to the distance p at each time point in a period in which the distance p is gradually increased and the state of A > Ath is continued after A > Ath is initially satisfied. Then, the process proceeds to Step S528.

If p ≥ PMmax is not satisfied, the CPU 71 passes step S527 and proceeds to step S528.

When the above processing is repeated until P > Pmax, the CPU 71 proceeds from step S529 to step S530. At this point, if the flag FM = 0, it is determined that moire or the like does not occur.

On the other hand, when the flag FM = 1, it is determined that moire or the like occurs. In this case, the CPU 71 proceeds to step S531 and performs moire occurrence determination processing.

For example, data indicating moire occurrence determination and an occurrence range, and information such as a flag are set. The range in which the moire occurs is a range from the distance indicated by the variable PMmin to the distance indicated by the variable PMmax. In other words, moire or the like occurs in the in-plane region of the image corresponding to this distance range.

The moire occurrence determination and the information of the occurrence range may be transmitted to, for example, the cloud server 41 or the like in association with the video data, the camera setting information CS, or the like. Furthermore, video data such as the captured video vC and the simulation video vSM may be added as metadata.

### <5. Conclusion and modifications>

According to the above-described embodiments, the following effects can be obtained.

The information processing device 70 functioning as the rendering engines 31 and 520 according to the embodiment includes a determination unit (36, 520d) that performs determination processing of determining whether or not an artifact occurs in the captured video vC by using the interval Wp of the LEDs which are the light emitting elements of the LED panel 506, the pixel interval Ws of the image sensor 20 of the camera 502, the characteristic (shift amount b) of the optical LPF 22, the focal distance f, the F value F, and the focusing distance l of the lens 21, and the distance p between the LED panel 506 and the camera 502.

As a result, it is possible to predict whether or not an artifact such as moire occurs on the basis of an acquirable numerical value at the imaging site or at the stage of examination before imaging. Then, the artifact can be predicted in the preliminary examination stage of the imaging or the preparation stage of the imaging site, so that the work at the time of imaging can be made efficient.

As artifacts such as moire, moire, grid, color shift, and the like can be determined.

Furthermore, the interval between the LEDs is used as an element on the LED panel 506 side for determination, and is not related to the video content. Therefore, even in a state where an image is not displayed on the LED wall 505, for example, moire determination according to the camera position can be performed.

In the embodiment, the determination unit (36, 520d) obtains the amplitude A of the image of the light emitting element on the image sensor 20 and compares the obtained amplitude A with the threshold Ath to determine whether an artifact has occurred (see Figs. 35 and 38).

For example, unevenness in brightness occurs when some blurred images of the subject overlap each other, which causes artifacts such as moire. Therefore, the amplitude is obtained for the image on the image sensor 20 of the actual LED of the LED panel 506. When the amplitude is large, it can be determined that moire or the like occurs.

In the embodiment, an example has been described in which the determination unit (36, 520d) acquires the shortest distance pmin and the longest distance pmax between the LED panel 506 and the camera 502, and performs the determination processing using the shortest distance pmin and the longest distance pmax (see Figs. 31, 35, and 38).

The LED panel 506 and the camera 502 are not necessarily in a confronting positional relationship, but rather in many cases face each other in an oblique direction. In this case, the shortest distance and the longest distance are generated as the distance of the camera 502 to the display surface of the LED wall 505 (LED panel 506). By performing moire determination within this range, occurrence of moire or the like can be appropriately determined regardless of the state of the position or direction of the camera 502.

In the embodiment, an example has been described in which the determination unit (36, 520d) determines a range in which an artifact occurs in the captured video vC (see Fig. 38).

That is, it is determined where the moire occurs in the range within the plane of the captured video vC. Such a determination result can also be used for various setting changes, imaging preparation, and the like.

According to the processing as illustrated in Fig. 38, it is possible to determine in which range the moire occurs between the shortest distance pmin and the longest distance pmax.

In the embodiment, an example has been described in which the determination unit (36, 520d) performs the warning processing in response to the determination that the artifact has occurred (see Figs. 14 and 15).

For example, by performing warning processing on a staff member or the like who is viewing in the pre-visualization stage, it is possible to take measures so that moire or the like does not occur in advance preparation. Furthermore, similarly, it is possible to take measures for a case where a warning is issued to a staff member at the stage of imaging preparation.

Moreover, in a case where it is determined that moire has occurred during imaging, by performing display or the like that gives a warning to the camera operator 512 or the like, the camera operator 512 can immediately take measures such as blurring the focus.

In the embodiment, an example has been described in which the determination unit (36, 520d) performs processing of associating the determination result information of the determination processing with the project. The project in this case is a video content production project. That is, this is a video production project produced by imaging performed in the imaging system 500. Note that associating the determination result information with the project includes information corresponding to the project, information associated with a video of the project, and the like. Associating with a video includes associating determination result information as management information or the like corresponding to the entire video content file, and associating determination result information as information corresponding to a frame of a video.

The associating processing includes processing of storing the data in the storage medium in an associated state and processing of transmitting the data to an external device.

For example, data indicating a determination result of occurrence of moire, a flag, and the like are stored in the storage medium in association with the video. Alternatively, data, a flag, and the like indicating a determination result of occurrence of moire are transmitted to the cloud server 41 in accordance with the camera settings and stored therein. As a result, for example, the moire determination result in the pre-visualization stage can be referred to at the time of imaging preparation or the like.

In the embodiment, an example has been described in which the determination unit (36, 520d) acquires all or some of the values as the LED interval Wp, the pixel interval Ws of the image sensor 20, the shift amount b of the optical LPF 22, the focal distance f, the F value F, the focusing distance l, and the distance p on the basis of information received by communication with another device.

For example, the determination units 36 and 520d acquire values necessary for the moire determination through communication with the LED panel 506, the camera 502, or an information processing device on the system. Alternatively, the determination units 36 and 520d may acquire the model number or the like of the LED panel 506 or the camera 502 by communication, and obtain each value according to the model number.

As a result, the determination units 36 and 520d can automatically obtain a necessary numerical value and perform moire determination.

In the embodiment, an example has been described in which the determination unit (36, 520d) compares the maximum amplitude value Amax of the LED image on the image sensor 20 with the threshold Ath in a plurality of distance values between the shortest distance pmin and the longest distance pmax, and determines that an artifact has occurred in a case where the maximum amplitude value Amax exceeds the threshold Ath (see Fig. 35).

As a result, it is possible to determine whether an artifact has occurred with relatively simple processing in the actual distance relationship.

The imaging system 500 of the embodiment is a system that takes a video of the LED panel 506 displaying a virtual video (background video vB) obtained by rendering using a 3D model with the camera 502.

Then, the rendering engine 31, which is the information processing device 70 according to the embodiment, includes a rendering unit 32 and a video processing unit 33 in addition to the determination unit 36. The rendering unit 32 performs rendering using the 3D model used in the imaging system 500 to generate a virtual video. The video processing unit 33 generates a simulation video vSM for the virtual video generated by the rendering unit 32 by using processing parameters that realize characteristics of luminance or color at the time of imaging of the camera 502 used in the imaging system 500.

That is, this is a configuration in a case where the present technology is applied to the rendering engine 31 in the pre-visualization system 700, and the rendering engine 31 includes the determination unit 36 in addition to the rendering unit 32 and the video processing unit 33. Therefore, in the pre-visualization stage, it is possible to determine whether or not moire or the like occurs in the video under the same conditions as those in the case of the actual imaging.

Furthermore, the rendering engine 520, which is the information processing device 70 according to the embodiment, includes a rendering unit 520a.

That is, this is a configuration in a case where the present technology is applied to the rendering engine 520 in the imaging system 500, and the rendering engine 520 includes the determination unit 520d. Therefore, it is possible to determine whether or not moire or the like occurs at the stage of imaging preparation or imaging.

Note that, in the imaging system 500, a determination unit that determines moire or the like, such as the determination unit 520d, may be provided in an information processing device other than the rendering engine 520.

For example, the determination unit may be provided in the camera 502, the display controller 590, the control unit on the operation monitor 550 side, or various control and calculation units (not illustrated) in Fig. 7.

A program of the embodiments is a program for causing a processor, for example, a CPU, a DSP, or the like, or a device including the processor to execute the process as illustrated in Figs. 14, 15, 35, and 38 described above.

That is, the program of the embodiment is a program for causing the information processing device 70 to execute processing of determining whether or not an artifact occurs in the captured video vC by using the interval Wp of the LED which is a light emitting element, the pixel interval Ws of the image sensor 20 of the camera 502, the shift amount b of the optical LPF 22, the focal distance f, the F value F, and the focusing distance l of the lens 21, and the distance p between the LED panel 506 and the camera 502.

With such a program, the information processing device 70 that executes the above-described determination processing of the embodiment can be implemented by various computer apparatuses.

Such a program can be recorded in advance in an HDD as a recording medium built in a device such as a computer apparatus, a ROM in a microcomputer having a CPU, or the like. Furthermore, such a program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Furthermore, such a program may be installed from the removable recording medium into a personal computer and the like, or may be downloaded from a download site through a network such as a local area network (LAN) or the Internet.

Furthermore, such a program is suitable for widely providing the information processing device 70 that performs determination processing, such as the information processing device 70 serving as the rendering engines 31 and 520 according to the embodiment. For example, by downloading the program to a personal computer, a communication device, a portable terminal device such as a smartphone or a tablet, a mobile phone, a game device, a video device, a personal digital assistant (PDA), or the like, these devices can be caused to function as the information processing device 70 of the present disclosure.

Note that the effects described in the present description are merely examples and are not limited, and other effects may be provided.

Note that the present technology can also have the following configurations.
(1) An information processing device including:
   a determination unit that performs determination processing of determining whether or not an artifact occurs in a captured video of a camera by using an interval between light emitting elements of a display, a pixel interval between image sensors of the camera, characteristics of an optical low-pass filter of the camera, a focal distance, an F value, and a focusing distance of a lens of the camera, and a distance between the display and the camera in an imaging system that captures a video of the display with the camera.
(2) The information processing device according to (1), in which
   in the determination processing, the determination unit obtains an amplitude of an image of the light emitting element on an image sensor, and compares the obtained amplitude with a threshold to determine whether an artifact has occurred.
(3) The information processing device according to (1) or (2), in which
   the determination unit acquires a shortest distance and a longest distance between the display and the camera, and performs the determination processing using the shortest distance and the longest distance.
(4) The information processing device according to any one of (1) to (3), in which
   in the determination processing, the determination unit determines a range in which an artifact occurs in the captured video.
(5) The information processing device according to any one of (1) to (4), in which
   the determination unit performs warning processing in response to determination that an artifact has occurred.
(6) The information processing device according to any one of (1) to (5), in which
   the determination unit performs processing of associating determination result information of the determination processing with a project.
(7) The information processing device according to any one of (1) to (6), in which
   the determination unit performs processing of storing the determination result information in a storage medium in association with a project.
(8) The information processing device according to any one of (1) to (7), in which
   the determination unit performs processing of transmitting the determination result information to an external device in association with a project.
(9) The information processing device according to any one of (1) to (8), in which
   the determination unit acquires all or some of values as an interval between light emitting elements of the display, a pixel interval between image sensors of the camera, characteristics of an optical low-pass filter of the camera, a focal distance of a lens of the camera, an F value, a focusing distance, and a distance between the display and the camera, on the basis of information received by communication with another device.
(10) The information processing device according to any one of (1) to (9), in which
   the determination unit is configured to:
   acquire a shortest distance and a longest distance between the display and the camera; and
   compare a maximum value of an amplitude of an image of the light emitting element on an image sensor with a threshold in a plurality of distance values from a shortest distance to a longest distance, and determine that an artifact has occurred in a case where the maximum value exceeds the threshold.
(11) The information processing device according to any one of (1) to (10), in which
   the imaging system is a system that captures, with a camera, a video of a display that displays a virtual video obtained by rendering using a 3D model, and
   the imaging system includes:
      a rendering unit that performs rendering using the 3D model to generate a virtual video; and
      a video processing unit that generates a simulation video for a virtual video generated by the rendering unit by using a processing parameter that realizes a luminance or color characteristic at a time of imaging of a camera used in the imaging system.
(12) The information processing device according to any one of (1) to (10), in which
   the imaging system is a system that captures, with a camera, a video of a display that displays a virtual video obtained by rendering using a 3D model, and
   the imaging system includes a rendering unit that performs rendering using the 3D model and generates a virtual video to be displayed on the display.
(13) An information processing method causing an information processing device to execute
   performing determination processing of determining whether or not an artifact occurs in a captured video of a camera by using an interval between light emitting elements of a display, a pixel interval between image sensors of the camera, characteristics of an optical low-pass filter of the camera, a focal distance, an F value, and a focusing distance of a lens of the camera, and a distance between the display and the camera in an imaging system that captures a video of the display with the camera.
(14) A program causing an information processing device to execute
   determining whether or not an artifact occurs in a captured video of a camera by using an interval between light emitting elements of a display, a pixel interval between image sensors of the camera, characteristics of an optical low-pass filter of the camera, a focal distance, an F value, and a focusing distance of a lens of the camera, and a distance between the display and the camera in an imaging system that captures a video of the display with the camera.
(15) An information processing device comprising:
   a determination unit configured to perform determination processing of determining whether or not an artifact occurs in a captured video of a camera in an imaging system that captures a video of a display with the camera, wherein the determination unit is configured to:
   obtain an amplitude of an image of a light emitting element of the display formed on an image sensor of the camera, on a basis of an interval between light emitting elements of the display and an optical characteristic of the camera, the amplitude being obtained without using a video displayed on the display; and
   determine that the artifact occurs in a case where the obtained amplitude exceeds a threshold.
16. The information processing device according to clause 15, wherein the amplitude is obtained at a spatial frequency corresponding to an interval of images of the light emitting elements formed on the image sensor, as an amplitude suppressed by an optical low-pass filter of the camera, by integration over pixels of the image sensor, and by blur of a lens of the camera.
17. The information processing device according to clause 16, wherein the determination unit is configured to obtain the amplitude on a basis of the interval of the images of the light emitting elements formed on the image sensor, a shift amount caused by the optical low-pass filter, a pixel interval of the image sensor, and a diameter of the blur caused by the lens.
18. The information processing device according to any one of clauses 15 to 17, wherein the determination unit is configured to acquire a shortest distance and a longest distance between the display and the camera, and to compare a maximum value of the amplitude, among a plurality of distance values from the shortest distance to the longest distance, with the threshold.
19. The information processing device according to any one of clauses 15 to 18, wherein in the determination processing the determination unit determines a range in which the artifact occurs in the captured video.
20. The information processing device according to any one of clauses 15 to 19, wherein the determination unit performs warning processing in response to a determination that the artifact has occurred.
21. The information processing device according to any one of clauses 15 to 20, wherein the determination unit performs processing of associating determination result information of the determination processing with a project.
22. The information processing device according to clause 21, wherein the determination unit performs processing of storing the determination result information in a storage medium in association with the project.
23. The information processing device according to clause 21 or 22, wherein the determination unit performs processing of transmitting the determination result information to an external device in association with the project.
24. The information processing device according to any one of clauses 14 to 23, wherein the determination unit acquires all or some of values used in the determination processing on a basis of information received by communication with another device.
25. The information processing device according to any one of clauses 15 to 24, wherein the imaging system is a system that captures, with the camera, a video of a display that displays a virtual video obtained by rendering using a 3D model, and
   the information processing device comprises a rendering unit that performs rendering using the 3D model to generate a virtual video, and a video processing unit that generates a simulation video for the virtual video generated by the rendering unit by using a processing parameter that realizes a luminance or colour characteristic at a time of imaging of a camera used in the imaging system.
26. The information processing device according to any one of clauses 15 to 24, wherein the imaging system is a system that captures, with the camera, a video of a display that displays a virtual video obtained by rendering using a 3D model, and
   the information processing device comprises a rendering unit that performs rendering using the 3D model and generates a virtual video to be displayed on the display.
27. An information processing method comprising, by an information processing device:
   obtaining an amplitude of an image of a light emitting element of a display formed on an image sensor of a camera, in an imaging system that captures a video of the display with the camera, on a basis of an interval between light emitting elements of the display and an optical characteristic of the camera, the amplitude being obtained without using a video displayed on the display; and
   determining that an artifact occurs in a captured video of the camera in a case where the obtained amplitude exceeds a threshold.
28. A computer program comprising instructions which, when the program is executed by a computer, cause the computer to carry out the method of clause 27.

### REFERENCE SIGNS LIST

- 20: Image sensor
- 21: Lens
- 22: Optical LPF
- 31: Rendering engine
- 32: Rendering unit
- 33: Video processing unit
- 35: Adjustment operation unit
- 36: Determination unit
- 37: Position operation unit
- 38: Communication unit
- 70: Information processing device
- 71: CPU
- 500: Imaging system
- 502: Camera
- 502S: Auxiliary camera
- 505: LED wall
- 506: LED panel
- 520: Rendering engine
- 520d: Determination unit

## Claims

1. An information processing device comprising:
a determination unit configured to perform determination processing of determining whether or not an artifact occurs in a captured video of a camera in an imaging system that captures a video of a display with the camera, wherein the determination unit is configured to:
obtain an amplitude of an image of a light emitting element of the display formed on an image sensor of the camera, on a basis of an interval between light emitting elements of the display and an optical characteristic of the camera, the amplitude being obtained without using a video displayed on the display; and
determine that the artifact occurs in a case where the obtained amplitude exceeds a threshold.

2. The information processing device according to claim 1, wherein the amplitude is obtained at a spatial frequency corresponding to an interval of images of the light emitting elements formed on the image sensor, as an amplitude suppressed by an optical low-pass filter of the camera, by integration over pixels of the image sensor, and by blur of a lens of the camera.

3. The information processing device according to claim 2, wherein the determination unit is configured to obtain the amplitude on a basis of the interval of the images of the light emitting elements formed on the image sensor, a shift amount caused by the optical low-pass filter, a pixel interval of the image sensor, and a diameter of the blur caused by the lens.

4. The information processing device according to any one of claims 1 to 3, wherein the determination unit is configured to acquire a shortest distance and a longest distance between the display and the camera, and to compare a maximum value of the amplitude, among a plurality of distance values from the shortest distance to the longest distance, with the threshold.

5. The information processing device according to any one of claims 1 to 4, wherein in the determination processing the determination unit determines a range in which the artifact occurs in the captured video.

6. The information processing device according to any one of claims 1 to 5, wherein the determination unit performs warning processing in response to a determination that the artifact has occurred.

7. The information processing device according to any one of claims 1 to 6, wherein the determination unit performs processing of associating determination result information of the determination processing with a project.

8. The information processing device according to claim 7, wherein the determination unit performs processing of storing the determination result information in a storage medium in association with the project.

9. The information processing device according to claim 7 or 8, wherein the determination unit performs processing of transmitting the determination result information to an external device in association with the project.

10. The information processing device according to any one of claims 1 to 9, wherein the determination unit acquires all or some of values used in the determination processing on a basis of information received by communication with another device.

11. The information processing device according to any one of claims 1 to 10, wherein the imaging system is a system that captures, with the camera, a video of a display that displays a virtual video obtained by rendering using a 3D model, and
the information processing device comprises a rendering unit that performs rendering using the 3D model to generate a virtual video, and a video processing unit that generates a simulation video for the virtual video generated by the rendering unit by using a processing parameter that realizes a luminance or colour characteristic at a time of imaging of a camera used in the imaging system.

12. The information processing device according to any one of claims 1 to 10, wherein the imaging system is a system that captures, with the camera, a video of a display that displays a virtual video obtained by rendering using a 3D model, and
the information processing device comprises a rendering unit that performs rendering using the 3D model and generates a virtual video to be displayed on the display.

13. An information processing method comprising, by an information processing device:
obtaining an amplitude of an image of a light emitting element of a display formed on an image sensor of a camera, in an imaging system that captures a video of the display with the camera, on a basis of an interval between light emitting elements of the display and an optical characteristic of the camera, the amplitude being obtained without using a video displayed on the display; and
determining that an artifact occurs in a captured video of the camera in a case where the obtained amplitude exceeds a threshold.

14. A computer program comprising instructions which, when the program is executed by a computer, cause the computer to carry out the method of claim 13.
